# EUROPEAN PATENT APPLICATION

(11) **EP 4 819 675 A1**
(43) Date of publication of application: **07.10.2026**
(21) Application number: 24902555.2
(22) Date of filing: 26.11.2024
(51) Int. Cl.: H04W 24/08

(54) **COMMUNICATION METHOD AND COMMUNICATION APPARATUS**

(30) Priority: 15.12.2023 CN 202311735809
(71) Applicant: Huawei Technologies Co., Ltd., Shenzhen, Guangdong 518129 (CN)
(72) Inventor: WANG, Han, Shenzhen, Guangdong 518129 (CN); HUANG, Su, Shenzhen, Guangdong 518129 (CN)
(74) Representative: Goddar, Heinz J.
(86) International application number: PCT/CN2024/134609
(87) International publication number: WO 2025/124133

(57) **Abstract**

A communication method and a communication apparatus. The method includes: a terminal sending terminal capability information to a first network element, receiving a first reference signal from an access network device, and sending a second reference signal to the access network device; and sending carrier phase information of the first reference signal to the first network element, wherein the carrier phase information of the first reference signal is obtained by measuring the received first reference signal. This application can detect the deformation of a target device in an NLOS scenario with the assistance of the terminal, thereby improving the accuracy of detecting the deformation of the target device.

## Description

### CROSS-REFERENCE TO RELATED APPLICATIONS

This application claims priority to Chinese Patent Application No. 202311735809.4, filed with the China National Intellectual Property Administration on December 15, 2023 and entitled "A COMMUNICATION METHOD AND A COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Traditional cellular positioning is an absolute positioning, which requires calculating the absolute location of a terminal/target based on measurement results. Conventional positioning methods include triangulation, hyperbolic positioning, and round trip time (round trip time, RTT) positioning, utilizing measurement quantities such as time of arrival (time of arrival, TOA), angle of arrival (angle of arrival, AOA), and carrier phase. The positioning/sensing center can determine the terminal's location based on the known locations of access network devices and the measurement information.

In contrast, deformation detection is a relative positioning, which does not require calculating the absolute location of the target but only needs to detect the relative positional movement of the target. This significantly reduces the complexity compared to traditional absolute positioning (making it more robust against factors such as access network device parameters, hardware imperfections, and initial phase). The primary detection method involves continuously transmitting signals with a fixed phase, collecting echo signals at different time points, and performing coherent processing on the signals from different time points to obtain the phase change, which corresponds to the deformation of the target device. The detection of minute deformations (referred to as micro-deformation in the following text, i.e., deformations of the target device at the centimeter or even millimeter level) has a wide range of applications in various fields, such as bridge inspection and industrial scenarios.

Currently, there is consideration to utilize an access network device for network-aware micro-deformation detection, which can reduce detection costs and improve measurement accuracy. However, in industrial scenarios, there may be situations where there is no line of sight (line of sight, LOS) between the transmitting and receiving access network devices. Therefore, how to achieve micro-deformation detection in non-line of sight (non line of sight, NLOS) scenarios is a technical issue that urgently needs to be addressed.

### SUMMARY

The embodiments of this application provide a communication method and a communication apparatus. In the embodiments of this application, a variation of a reference signal carrier phase of the to-be-detected device is determined by taking into account the terminal capability information, thereby making the deformation detection of the target device more accurate. Therefore, the deformation detection of the target device in an NLOS scenario can be achieved through terminal assistance, thereby improving the accuracy of detecting the deformation of the target device.

According to a first aspect, an embodiment of this application provides a communication method. The method may be performed by a terminal, or may be performed by a module (for example, a processor, a chip, or a chip system) applied to the terminal, or may be implemented by a logical node, a logical module, or software that can implement all or a part of the functions of the terminal. The method may include: sending terminal capability information to a first network element; receiving a first reference signal from an access network device, and sending a second reference signal to the access network device; and sending carrier phase information of the first reference signal to the first network element, where the carrier phase information of the first reference signal is obtained by measuring the received first reference signal.

In the solution provided in this application, the terminal may report the terminal capability information, so that the first network element can configure a time interval for transmitting and receiving signals between the terminal and the access network device based on the terminal capability information (In this embodiment, the terminal sends the second reference signal to the access network device, and the access network device sends the first reference signal to the terminal.) so as to avoid transmitting and receiving signals with the access network device in a time period in which performance of the terminal is unstable as much as possible. The first network element determines the variation of the reference signal carrier phase of the to-be-detected device based on the carrier phase information of the signal reported by the terminal and the access network device, and the variation of the reference signal carrier phase of the to-be-detected device is accurate. Alternatively, the first network element may compensate, based on the terminal capability information, for the carrier phase information of the signals reported by the terminal and the access network device, and determine the variation of the reference signal carrier phase of the to-be-detected device. Therefore, in this embodiment of this application, the variation of the reference signal carrier phase of the to-be-detected device is determined with reference to the terminal capability information, so that the deformation of the target device is more accurately detected. Deformation detection of the target device in the NLOS scenario may be implemented with the assistance of a terminal, so that precision of deformation detection of the target device can be improved.

In a possible implementation, the terminal capability information includes at least one of an initial phase stability capability and a clock drift stability capability. By implementing this possible implementation, the terminal may report at least one of the initial phase stability capability and the clock drift stability capability, so that the first network element can configure a time interval for transmitting and receiving signals between the terminal and the access network device based on at least one of the initial phase stability capability and the clock drift stability capability. This allows the first network element to avoid, as much as possible, transmitting and receiving signals with the access network device during periods when the terminal's performance is unstable, thereby ensuring that the first network element accurately determines the variation in the reference signal carrier phase of the to-be-detected device based on the carrier phase information of the signals reported by the terminal and the access network device. In the process of determining the variation in the reference signal carrier phase of the to-be-detected device, the initial phase stability capability and/or the clock drift stability capability of the terminal are considered, making the detection of the deformation of the target device more accurate.

In a possible implementation, the initial phase stability capability includes at least one of indicating whether the initial phase of the terminal is stable and indicating a time range within which the initial phase of the terminal is stable.

In a possible implementation, the clock drift stability capability includes at least one of indicating whether the clock drift of the terminal is stable and indicating a time range within which the clock drift of the terminal is stable.

In a possible implementation, the terminal capability information includes a variation of the initial phase. By implementing this possible implementation, the terminal can report the variation of the initial phase of the terminal, so that the first network element can determine the variation of the reference signal carrier phase of the to-be-detected device based on the variation of the initial phase and the carrier phase information of the signals reported by the terminal and the access network device. In the process of determining the variation of the reference signal carrier phase of the to-be-detected device, the variation of the initial phase of the terminal is combined, thereby making the detection of the deformation of the target device more accurate.

In a possible implementation, the variation of the initial phase includes the variation of the initial phase corresponding to the time range.

In a possible implementation, the variation of the initial phase is between 0 and 2π.

In a possible implementation, the receiving a first reference signal from an access network device and sending a second reference signal to the access network device includes: receiving the first reference signal from the access network device and sending the second reference signal to the access network device based on the terminal capability information. By implementing this possible implementation, the terminal can perform signal transmission and reception with the access network device according to the terminal capability information. For example, after receiving the first reference signal, the terminal sends the second reference signal to the access network device based on a time interval determined by the terminal capability information. The terminal measures the first reference signal and reports the carrier phase information of the first reference signal obtained from the measurement to the first network element, while the access network device measures the second reference signal and reports the carrier phase information of the second reference signal obtained from the measurement to the first network element, so that the first network element can determine the variation of the reference signal carrier phase of the to-be-detected device. Therefore, in this embodiment, the variation of the reference signal carrier phase of the to-be-detected device is determined by combining the terminal capability information, which makes the detection of the deformation of the target device more accurate.

In a possible implementation, the receiving a first reference signal from an access network device and sending a second reference signal to the access network device based on the terminal capability information includes: receiving the first reference signal from the access network device, and sending the second reference signal to the access network device according to a time interval, wherein the time interval is determined by the first network element based on the terminal capability information.

In a possible implementation, the time interval is an interval between the terminal receiving the first reference signal and sending the second reference signal.

In a possible implementation, the receiving a first reference signal from an access network device and sending a second reference signal to the access network device based on the terminal capability information includes: receiving the first reference signal from the access network device and sending the second reference signal to the access network device for N rounds according to a time interval, wherein N is a positive integer, and the time interval is determined by the first network element based on the terminal capability information. By implementing this possible implementation, the terminal and the access network device may perform one or more rounds of signal transmission and reception (one round may be understood as the access network device sending the first reference signal to the terminal, and the terminal sending the second reference signal to the access network device). The multi-round scenario may, for example, be applicable to a round trip time (round trip time, RTT) carrier phase measurement scenario. This way, the scenario where the variation in the reference signal carrier phase of the to-be-detected device is determined by combining the terminal capability information is more widely applicable.

In a possible implementation, the time interval is an interval between each two adjacent transmissions of the second reference signal by the terminal when the second reference signal is transmitted N times.

In a possible implementation, the method further includes: receiving first configuration information from an access network device, where the first configuration information configures a resource for the second reference signal, and the first configuration information includes a time interval. By implementing this possible implementation, the time interval determined by the terminal capability information may be included in the first configuration information sent to the terminal, thereby saving signaling overhead.

In a possible implementation, the receiving a first reference signal from an access network device based on the terminal capability information, and sending a second reference signal to the access network device includes: sending the second reference signal to the access network device, and receiving the first reference signal from the access network device, where the first reference signal is sent to the terminal by the access network device based on a time interval after receiving the second reference signal from the terminal, and the time interval is determined by the first network element based on the terminal capability information. By implementing this possible implementation, the access network device can perform signal transmission and reception with the terminal based on the terminal capability information. For example, after receiving the second reference signal, the access network device sends the first reference signal to the terminal based on the time interval determined by the terminal capability information. The terminal measures the first reference signal and reports the carrier phase information of the first reference signal obtained from the measurement to the first network element, so that the first network element can determine the variation in the reference signal carrier phase of the to-be-detected device. Therefore, in this embodiment, the variation in the reference signal carrier phase of the to-be-detected device is determined by combining the terminal capability information, thereby making the detection of the deformation of the target device more accurate.

In a possible implementation, the time interval is an interval between receiving the second reference signal and transmitting the first reference signal by the access network device.

In a possible implementation, the receiving a first reference signal from an access network device and sending a second reference signal to the access network device based on the terminal capability information includes: sending the second reference signal to the access network device and receiving the first reference signal from the access network device for N rounds based on a time interval, where the time interval is determined by the first network element based on the terminal capability information, and N is a positive integer.

In a possible implementation, the time interval is an interval between each two adjacent transmissions of the first reference signal by the access network device when the first reference signal is transmitted N times.

In a possible implementation, the method further includes: receiving second configuration information from a first network element, wherein the second configuration information configures a resource for the first reference signal.

In a possible implementation, the carrier phase information of the first reference signal includes the terminal capability information. By implementing this possible implementation, the terminal capability information can be included in the measurement result (the carrier phase information of the first reference signal) of the terminal when measuring the first reference signal for reporting, thereby improving the accuracy of the next detection of the deformation of the target device; or if the terminal has not reported this part of the terminal capability information before (for example, during the initialization access process), this terminal capability information can also be included in the carrier phase information of the first reference signal for reporting, thereby improving the accuracy of the next detection of the deformation of the target device; or the terminal capability information is reported only in the RTT carrier phase scenario, thereby reducing signaling overhead through on-demand reporting.

In a possible implementation, the first reference signal is a positioning reference signal (positioning reference signal, PRS), and the second reference signal is a sounding reference signal (sounding reference signal, SRS).

According to a second aspect, this application provides a communication method, which may be performed by a first network element, or may be performed by a module (for example, a processor, a chip, or a chip system) applied to the first network element, or may be implemented by a logical node, a logical module, or software that can implement all or a part of the functions of the first network element. The method may include: receiving terminal capability information from a terminal; receiving carrier phase information of a first reference signal from the terminal, where the carrier phase information of the first reference signal is obtained by the terminal through measuring the received first reference signal; receiving carrier phase information of a second reference signal from an access network device, where the carrier phase information of the second reference signal is obtained by the access network device through measuring the received second reference signal; where the first reference signal is received and sent between the terminal and the access network device based on the terminal capability information, or the second reference signal is sent and received between the terminal and the access network device based on the terminal capability information; and determining a variation of a reference signal carrier phase of a to-be-detected device based on the carrier phase information of the first reference signal and the carrier phase information of the second reference signal.

In the solution provided in this application, the first network element may receive terminal capability information from the terminal, so that the first network element can configure a time interval for signal transmission and reception between the terminal and the access network device based on the terminal capability information, thereby avoiding, as much as possible, the period when the terminal performance is unstable for signal transmission and reception with the access network device (as mentioned in this embodiment, the terminal sends a second reference signal to the access network device, and the access network device sends a first reference signal to the terminal), so that the first network element can accurately determine the variation in the reference signal carrier phase of the to-be-detected device based on the carrier phase information of the signals reported by the terminal and the access network device. Therefore, in this embodiment of this application, the variation in the reference signal carrier phase of the to-be-detected device is determined by taking into account the terminal capability information, which makes the detection of the deformation of the target device more accurate. The detection of the deformation of the target device in an NLOS scenario can be achieved with the assistance of the terminal, thereby improving the accuracy of the deformation detection of the target device.

It should be understood that an entity executing the second aspect may be the first network element. The specific content of the second aspect corresponds to the content of the first aspect. For the corresponding features of the second aspect and the beneficial effects achieved thereby, reference may be made to the descriptions of the first aspect. To avoid repetition, detailed descriptions are appropriately omitted herein.

In a possible implementation, the terminal capability information includes at least one of an initial phase stability capability and a clock drift stability capability. By implementing this possible implementation, the first network element may receive at least one of the initial phase stability capability and the clock drift stability capability reported by the terminal, so that the first network element can configure a time interval for transmitting and receiving signals between the terminal and the access network device based on at least one of the initial phase stability capability and the clock drift stability capability, thereby avoiding, as much as possible, transmitting and receiving signals with the access network device during periods when the terminal's performance is unstable. This ensures that the first network element accurately determines the variation in the reference signal carrier phase of the to-be-detected device based on the carrier phase information of the signals reported by the terminal and the access network device. In the process of determining the variation in the reference signal carrier phase of the to-be-detected device, the initial phase stability capability and/or the clock drift stability capability of the terminal are considered, thereby making the detection of the deformation of the target device more accurate.

In a possible implementation, the initial phase stability capability includes at least one of indicating whether the initial phase of the terminal is stable and indicating a time range within which the initial phase of the terminal is stable.

In a possible implementation, the clock drift stability capability includes at least one of indicating whether the clock drift of the terminal is stable and indicating a time range within which the clock drift of the terminal is stable.

In a possible implementation, the method may further include determining a time interval based on the terminal capability information. By implementing this possible implementation, the first network element can determine the time interval based on the terminal capability information and send the time interval to the terminal and/or the access network device, so that the terminal and/or the access network device can transmit and receive reference signals based on the time interval. This approach, which incorporates the terminal capability information, can make the detection of the deformation of the target device more accurate.

In a possible implementation, the first reference signal is received and transmitted between the terminal and the access network device based on the terminal capability information includes: the first reference signal is received by the access network device from the terminal, and the access network device sends the first reference signal to the terminal based on a time interval. By implementing this possible implementation, after receiving the first reference signal, the terminal can send the second reference signal to the access network device based on the time interval determined by the terminal capability information. The access network device measures the second reference signal and reports the carrier phase information of the measured second reference signal to the first network element, so that the first network element can determine the variation in the reference signal carrier phase of the to-be-detected device. Therefore, in this embodiment, the variation in the reference signal carrier phase of the to-be-detected device is determined by incorporating the terminal capability information, thereby making the detection of the deformation of the target device more accurate.

In a possible implementation, the time interval is an interval between the access network device receiving the second reference signal and transmitting the first reference signal.

In a possible implementation, the time interval is an interval between each two adjacent transmissions of the first reference signal by the access network device when the first reference signal is transmitted N times.

In a possible implementation, the method may further include: sending third configuration information to an access network device, where the third configuration information configures a resource for the first reference signal, and the third configuration information includes a time interval. By implementing this possible implementation, the time interval determined by the terminal capability information may be included in the third configuration information sent to the access network device, thereby saving signaling overhead.

In a possible implementation, where the second reference signal is sent and received by the terminal and the access network device based on the terminal capability information, the second reference signal is specifically that the terminal receives the first reference signal from the access network device and sends the second reference signal to the access network device according to a time interval. By implementing this possible implementation, the terminal can send the second reference signal to the access network device according to the time interval determined by the terminal capability information after receiving the first reference signal. The access network device measures the second reference signal and reports the carrier phase information of the measured second reference signal to the first network element, so that the first network element can determine the variation in the reference signal carrier phase of the to-be-detected device. Therefore, in this embodiment, the variation in the reference signal carrier phase of the to-be-detected device is determined by combining the terminal capability information, which makes the detection of the deformation of the target device more accurate.

In a possible implementation, the time interval is an interval between receiving the first reference signal and sending the second reference signal by the terminal.

In a possible implementation, the time interval is an interval between each two adjacent times when the terminal sends the second reference signal for N times.

In a possible implementation, the method may further include: sending second configuration information to the terminal, where the second configuration information configures a resource for the first reference signal.

In a possible implementation, the carrier phase information of the first reference signal includes the terminal capability information.

In a possible implementation, the first reference signal is a PRS, and the second reference signal is an SRS.

According to a third aspect, this application provides a communication method, which may be performed by a first network element, or may be performed by a module (such as a processor, a chip, or a chip system) applied to the first network element, or may be implemented by a logical node, a logical module, or software that can implement all or a part of the functions of the first network element. The method may include: receiving terminal capability information from a terminal; receiving carrier phase information of a first reference signal from the terminal, where the carrier phase information of the first reference signal is obtained by the terminal through measuring the received first reference signal; receiving carrier phase information of a second reference signal from an access network device, where the carrier phase information of the second reference signal is obtained by the access network device through measuring the received second reference signal; and determining a variation of a reference signal carrier phase of a to-be-detected device based on the terminal capability information, the carrier phase information of the first reference signal, and the carrier phase information of the second reference signal.

In the solution provided by this application, the first network element may receive terminal capability information from a terminal, so that the first network element can determine the variation of the reference signal carrier phase of the to-be-detected device based on the terminal capability information and the carrier phase information of the signals reported by the terminal and the access network device, or it can be understood that the first network element compensates for the variation of the reference signal carrier phase of the to-be-detected device using the terminal capability information reported by the terminal. Therefore, in the embodiments of this application, the variation of the reference signal carrier phase of the to-be-detected device is determined by combining the terminal capability information, thereby making the detection of the deformation of the target device more accurate. The detection of the deformation of the target device in an NLOS scenario can be achieved with the assistance of the terminal, thereby improving the accuracy of the deformation detection of the target device.

It should be understood that an entity executing the third aspect may be the first network element. The specific content of the third aspect corresponds to the content of the first aspect. For the corresponding features of the third aspect and the beneficial effects achieved, reference may be made to the descriptions of the first aspect. To avoid repetition, detailed descriptions are appropriately omitted herein.

In a possible implementation, the terminal capability information includes a variation of the initial phase. By implementing this possible implementation, the first network element may receive the variation of the initial phase of the terminal reported by the terminal, so that the first network element can determine the variation of the carrier phase of the reference signal of the to-be-detected device based on the variation of the initial phase and the carrier phase information of the signal reported by the terminal and the access network device. Alternatively, it may be understood that the first network element compensates for the variation of the carrier phase of the reference signal of the to-be-detected device using the variation of the initial phase. In the process of determining the variation of the carrier phase of the reference signal of the to-be-detected device, the variation of the initial phase of the terminal is combined, thereby making the detection of the deformation of the target device more accurate.

In a possible implementation, the variation of the initial phase includes the variation of the initial phase corresponding to the time range.

In a possible implementation, the variation of the initial phase is between 0 and 2π.

In a possible implementation, the method may further include: sending second configuration information to the terminal, where the second configuration information configures a resource for the second reference signal.

In a possible implementation, the method may further include: sending third configuration information to the access network device, where the third configuration information configures a resource for the first reference signal.

In a possible implementation, the carrier phase information of the first reference signal includes the terminal capability information.

In a possible implementation, the first reference signal is a PRS, and the second reference signal is an SRS.

According to a fourth aspect, this application provides a communication method, which may be performed by an access network device, or may be performed by a module (for example, a processor, a chip, or a chip system) applied to an access network device, or may be implemented by a logical node, a logical module, or software that can implement all or some functions of the access network device. The method may include: receiving a second reference signal from a terminal, and sending a first reference signal to the terminal; and sending carrier phase information of the second reference signal to a first network element, where the carrier phase information of the second reference signal is obtained by measuring the received second reference signal.

In the solution provided in this application, the first network element may receive the terminal capability information from the terminal, so that the first network element can determine the variation of the reference signal carrier phase of the to-be-detected device based on the terminal capability information and the carrier phase information of the signal reported by the access network device, or, in other words, the first network element compensates for the variation of the reference signal carrier phase of the to-be-detected device using the terminal capability information reported by the terminal. Therefore, in this embodiment of this application, the variation of the reference signal carrier phase of the to-be-detected device is determined by combining the terminal capability information, thereby making the detection of the deformation of the target device more accurate. The detection of the deformation of the target device in an NLOS scenario can be implemented with the assistance of the terminal, thereby improving the accuracy of the deformation detection of the target device.

It should be understood that the entity executing the fourth aspect may be an access network device. The specific content of the fourth aspect corresponds to the content of the first aspect. For the corresponding features of the fourth aspect and the beneficial effects achieved, reference may be made to the descriptions of the first aspect. To avoid repetition, detailed descriptions are appropriately omitted herein.

In a possible implementation, the method further includes: receiving terminal capability information from a terminal. By implementing this possible implementation, the terminal can report the terminal capability information, so that the access network device can configure a time interval for signal transmission and reception between the terminal and the access network device (where the terminal sends a second reference signal to the access network device, and the access network device sends a first reference signal to the terminal, as mentioned in this embodiment) based on the terminal capability information. This allows the access network device to avoid, as much as possible, transmitting and receiving signals with the terminal when the terminal performance is unstable, so that the first network element can accurately determine the variation in the reference signal carrier phase of the to-be-detected device based on the carrier phase information of the signals reported by the terminal and the access network device; or the first network element can compensate the carrier phase information of the signals reported by the terminal and the access network device based on the terminal capability information to determine the variation in the reference signal carrier phase of the to-be-detected device. Therefore, in this embodiment of this application, the variation in the reference signal carrier phase of the to-be-detected device is determined by combining the terminal capability information, which makes the detection of the deformation of the target device more accurate. The detection of the deformation of the target device in an NLOS scenario can be implemented with the assistance of the terminal, thereby improving the accuracy of the detection of the deformation of the target device.

In a possible implementation, the receiving a second reference signal from a terminal and sending a first reference signal to the terminal includes: receiving the second reference signal from the terminal based on the terminal capability information, and sending the first reference signal to the terminal. By implementing this possible implementation, the first network element can configure, according to the terminal capability information reported by the terminal, the time interval for the access network device to receive and transmit signals (where the terminal sends the second reference signal to the access network device, and the access network device sends the first reference signal to the terminal) between the access network device and the terminal, thereby avoiding, as much as possible, the time when the terminal performance is unstable, for the access network device to receive and transmit signals with the terminal, so that the first network element can accurately determine the variation in the reference signal carrier phase of the to-be-detected device based on the carrier phase information of the signals reported by the terminal and the access network device. Therefore, in this embodiment of this application, the variation in the reference signal carrier phase of the to-be-detected device is determined by taking into account the terminal capability information, thereby making the detection of the deformation of the target device more accurate. The detection of the deformation of the target device in an NLOS scenario can be achieved with the assistance of the terminal, thereby improving the accuracy of the deformation detection of the target device.

In a possible implementation, the terminal capability information includes at least one of an initial phase stability capability and a clock drift stability capability. By implementing this possible implementation, the first network element may receive at least one of the initial phase stability capability and the clock drift stability capability reported by the terminal, so that the first network element can configure a time interval for transmitting and receiving signals between the access network device and the terminal based on at least one of the initial phase stability capability and the clock drift stability capability, thereby avoiding, as much as possible, the time when the terminal performance is unstable, the access network device from transmitting and receiving signals with the terminal, so that the first network element can accurately determine the variation in the reference signal carrier phase of the to-be-detected device based on the carrier phase information of the signals reported by the terminal and the access network device. In the process of determining the variation in the reference signal carrier phase of the to-be-detected device, the initial phase stability capability and/or the clock drift stability capability of the terminal are combined, thereby making the detection of the deformation of the target device more accurate.

In a possible implementation, the initial phase stability capability includes at least one of indicating whether the initial phase of the terminal is stable and indicating a time range within which the initial phase of the terminal is stable.

In a possible implementation, the clock drift stability capability includes at least one of indicating whether the clock drift of the terminal is stable and indicating a time range within which the clock drift of the terminal is stable.

In a possible implementation, the receiving a second reference signal from the terminal based on the terminal capability information and sending a first reference signal to the terminal includes: receiving the second reference signal from the terminal, and sending the first reference signal to the terminal based on a time interval, where the time interval is determined by the first network element based on the terminal capability information. By implementing this possible implementation, the access network device can perform signal transmission and reception with the terminal based on the terminal capability information, for example, after receiving the second reference signal, sending the first reference signal to the terminal based on the time interval determined by the terminal capability information. The terminal measures the first reference signal and reports the carrier phase information of the first reference signal obtained through measurement to the first network element, so that the first network element can determine the variation of the reference signal carrier phase of the to-be-detected device. Therefore, in this embodiment, the variation of the reference signal carrier phase of the to-be-detected device is determined by combining the terminal capability information, thereby making the detection of the deformation of the target device more accurate.

In a possible implementation, the time interval is an interval between the access network device receiving the second reference signal and transmitting the first reference signal.

In a possible implementation, the receiving a second reference signal from the terminal based on the terminal capability information and sending a first reference signal to the terminal includes: receiving the second reference signal from the terminal and sending the first reference signal to the terminal for N rounds based on a time interval, where N is a positive integer, and the time interval is determined by the first network element based on the terminal capability information. By implementing this possible implementation, the access network device and the terminal can perform one or more rounds of signal transmission and reception (one round may be understood as the access network device sending the first reference signal to the terminal, and the terminal sending the second reference signal to the access network device). The scenario of multiple rounds may, for example, be applicable to RTT carrier phase measurement scenarios. In this way, the scenario where the variation in the reference signal carrier phase of the to-be-detected device is determined by combining the terminal capability information is more widely applicable.

In a possible implementation, the time interval is an interval between each two adjacent transmissions of the first reference signal by the access network device when the first reference signal is transmitted for N times.

In a possible implementation, the receiving a second reference signal from the terminal based on the terminal capability information, and sending a first reference signal to the terminal includes: sending the first reference signal to the terminal, and receiving the second reference signal from the terminal, where the second reference signal is sent by the terminal to the access network device based on a time interval after receiving the first reference signal from the access network device, and the time interval is determined by the first network element based on the terminal capability information. By implementing this possible implementation, the terminal can perform signal transmission and reception with the terminal based on the terminal capability information. For example, after receiving the first reference signal, the terminal sends the second reference signal to the access network device based on the time interval determined by the terminal capability information. The access network device measures the second reference signal and reports the carrier phase information of the measured second reference signal to the first network element, so that the first network element can determine the variation of the reference signal carrier phase of the to-be-detected device. Therefore, in this embodiment, the variation of the reference signal carrier phase of the to-be-detected device is determined by combining the terminal capability information, thereby making the detection of the deformation of the target device more accurate.

In a possible implementation, the time interval is an interval between the terminal receiving the first reference signal and transmitting the second reference signal.

In a possible implementation, the receiving a second reference signal from the terminal based on the terminal capability information, and sending a first reference signal to the terminal includes: sending the first reference signal to the terminal and receiving the second reference signal from the terminal for N rounds based on a time interval, where the time interval is determined by the first network element based on the terminal capability information, and N is a positive integer.

In a possible implementation, the time interval is an interval between each two adjacent transmissions of the second reference signal by the terminal when the second reference signal is transmitted N times.

In a possible implementation, the method may further include: sending first configuration information to a terminal, wherein the first configuration information configures a resource for a second reference signal.

In a possible implementation, the method may further include: sending first configuration information to a terminal, wherein the first configuration information configures a resource for a second reference signal, and the first configuration information includes a time interval.

In a possible implementation, the method may further include: receiving third configuration information from a first network element, where the third configuration information configures a resource for the first reference signal, and the third configuration information includes a time interval.

In a possible implementation, the first reference signal is a PRS, and the second reference signal is an SRS.

According to a fifth aspect, this application provides a communication apparatus, where the communication apparatus includes modules/units configured to perform the method according to any one of the first aspect or the possible implementations thereof. The apparatus may be a terminal, or may be a module (for example, a chip, a chip system, or a processor) applied to a terminal, or may be a logical node, a logical module, or software that can implement all or a part of the terminal functions.

According to a sixth aspect, this application provides a communication apparatus, where the communication apparatus includes modules/units configured to perform the method according to any one of the second aspect and its possible implementations, or the third aspect and its possible implementations. The apparatus may be a first network element, or may be a module (for example, a chip, a chip system, or a processor) applied to the first network element, or may be a logical node, a logical module, or software that can implement all or a part of the functions of the first network element.

According to a seventh aspect, this application provides a communications apparatus, where the communications apparatus includes modules/units configured to perform the method according to any one of the third aspect and the possible implementations of the third aspect. The apparatus may be an access network device, or may be a module (for example, a chip, a chip system, or a processor) applied to an access network device, or may be a logical node, a logical module, or software that can implement all or some functions of the access network device.

According to an eighth aspect, this application provides a communications apparatus. The apparatus may be a terminal, or may be a chip, a chip system, a processor, or the like that supports the terminal in implementing the foregoing method, or may be a logical node, a logical module, or software that can implement all or some functions of the terminal. The communications apparatus may alternatively be a chip system. The communications apparatus may perform the method according to the first aspect. A function of the communications apparatus may be implemented by hardware, or may be implemented by hardware by executing corresponding software. The hardware or the software includes one or more units corresponding to the foregoing functions. The unit may be software and/or hardware. For operations performed by the communications apparatus and beneficial effects thereof, refer to the method and beneficial effects according to the first aspect. Repeated parts are not described again.

According to a ninth aspect, this application provides a communication apparatus. The apparatus may be a first network element, or may be a chip, a chip system, a processor, or the like that supports the first network element in implementing the foregoing method, or may be a logical node, a logical module, or software that can implement all or a part of the functions of the first network element. The communication apparatus may alternatively be a chip system. The communication apparatus may perform the method according to the second aspect or the third aspect. The functions of the communication apparatus may be implemented by hardware, or may be implemented by hardware executing corresponding software. The hardware or software includes one or more units corresponding to the foregoing functions. The unit may be software and/or hardware. For operations performed by the communication apparatus and beneficial effects thereof, refer to the method and beneficial effects according to the second aspect or the third aspect, and no repeated details are provided herein again.

According to a tenth aspect, this application provides a communication apparatus. The apparatus may be an access network device, or may be a chip, a chip system, a processor, or the like that supports an access network device in implementing the foregoing method, or may be a logical node, a logical module, or software that can implement all or a part of the functions of the access network device. The communication apparatus may alternatively be a chip system. The communication apparatus may perform the method according to the fourth aspect. The functions of the communication apparatus may be implemented by hardware, or may be implemented by hardware executing corresponding software. The hardware or software includes one or more units corresponding to the foregoing functions. The unit may be software and/or hardware. For operations performed by the communication apparatus and beneficial effects thereof, refer to the method and beneficial effects according to the fourth aspect, and no repeated details are provided herein again.

According to an eleventh aspect, this application provides a computer-readable storage medium, where the computer-readable storage medium is configured to store computer-executable instructions. When the computer-executable instructions are executed, the method performed by the terminal in the method according to the first aspect is implemented; or the method performed by the first network element in the method according to the second aspect is implemented; or the method performed by the first network element in the method according to the third aspect is implemented; or the method performed by the access network device in the method according to the fourth aspect is implemented.

According to a twelfth aspect, this application provides a computer program product comprising a computer program, where when the computer program is executed, the method performed by the terminal in the method according to the first aspect is implemented; or the method performed by the first network element in the method according to the second aspect is implemented; or the method performed by the first network element in the method according to the third aspect is implemented; or the method performed by the access network device in the method according to the fourth aspect is implemented.

According to a thirteenth aspect, this application provides a communication system, where the communication system includes a communication apparatus (for example, a terminal) configured to perform the method according to the first aspect, a communication apparatus (for example, a first network element) configured to perform the method according to the second and third aspects, and a communication apparatus (for example, an access network device) configured to perform the method according to the fourth aspect.

### BRIEF DESCRIPTION OF THE DRAWINGS

FIG. 1 is a schematic architectural diagram of a communication system 1000 to which an embodiment of this application is applied;
FIG. 2 is a schematic diagram of a network architecture according to an embodiment of this application;
FIG. 3 is a schematic diagram of micro-deformation detection based on an RTT carrier phase according to an embodiment of this application;
FIG. 4 to FIG. 10 are schematic interaction diagrams of a communication method according to an embodiment of this application;
FIG. 11 and FIG. 12 are schematic structural diagrams of possible communication apparatuses according to an embodiment of this application.

### DETAILED DESCRIPTION OF EMBODIMENTS

The following further describes specific embodiments of this application in detail with reference to the accompanying drawings.

In the specification, claims, and accompanying drawings of this application, the terms "first", "second", and the like are intended to distinguish between different objects but do not indicate a particular order. In addition, the terms "include", "have", and any other variant thereof are intended to cover a non-exclusive inclusion. For example, a process, method, system, product, or device that includes a series of steps or units is not limited to those steps or units that are listed, but may optionally further include other steps or units that are not listed, or optionally further include other inherent steps or units of these processes, methods, systems, products, or devices.

The term "embodiment" mentioned in this specification means that a particular feature, structure, or characteristic described in connection with an embodiment may be incorporated into at least one embodiment of this application. The occurrence of the phrase in various places in this specification does not necessarily refer to the same embodiment, nor does it mean an independent or optional embodiment exclusive from other embodiments. A person skilled in the art would understand, explicitly or implicitly, that embodiments described in this specification may be combined with other embodiments.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate the following three cases: only A exists, only B exists, and both A and B exist, where A and B may be singular or plural. The character "/" generally indicates an "or" relationship between the associated objects. "At least one of the following" or a similar expression means any combination of these items, including any combination of a single item or a plurality of items. For example, "at least one of a, b, or c" may indicate a, b, c, "a and b", "a and c", "b and c", or "a, b, and c", where a, b, and c may each be one or more.

In this application, "sending information" may be understood as a device sending information to another device, or may be understood as a logical module inside a device sending information to another logical module. For example, "an access network device sends information" may be understood as an access network device sending information to another device (for example, a terminal), or may be understood as a logical module 1 in the access network device sending information to a logical module 2 in the access network device.

In this application, "receiving information"may be understood as a device receiving information from another device, or may be understood as a logical module inside a device receiving information from another logical module. For example, "an access network device receives information" may be understood as an access network device receiving information from another device (for example, a terminal), or may be understood as a logical module 1 in the access network device receiving information from a logical module 2 in the access network device.

In this application, "sending information to... (for example, a terminal)" may be understood as that a destination end of the information is the terminal. This may include directly or indirectly sending the information to the terminal. "Receiving information from... (for example, a terminal)" or "receiving information from... (for example, a terminal)" may be understood as that a source end of the information is the terminal, and may include directly or indirectly receiving the information from the terminal. The information may be processed, for example, format change, between a source end and a destination end of information sending, but the destination end may understand the information as valid information from the source end. Similar expressions in this application may be understood in a similar manner, and details are not described herein again.

To better understand embodiments of this application, the following first describes a system architecture used in embodiments of this application.

Embodiments of this application may be applied to a communications system evolved after 5G, such as a long term evolution (long term evolution, LTE) system, a 5th generation mobile communication (5th generation mobile communication, 5G) system, a 6th generation mobile communication (6th generation mobile communication, 6G) system, a satellite communication system, and a short-range wireless communication system. The wireless communication system mentioned in embodiments of this application includes but is not limited to three application scenarios of 5G/6G mobile communication systems: enhanced mobile broadband (enhanced mobile broadband, eMBB), ultra-reliable and low-latency communication (ultra reliable low latency communication, URLLC), and massive machine-type communications (massive machine type of communication, mMTC), or a long range (long range, LoRa) system or an Internet of Vehicles system. The wireless communication system may include one or more access network devices and one or more terminal devices.

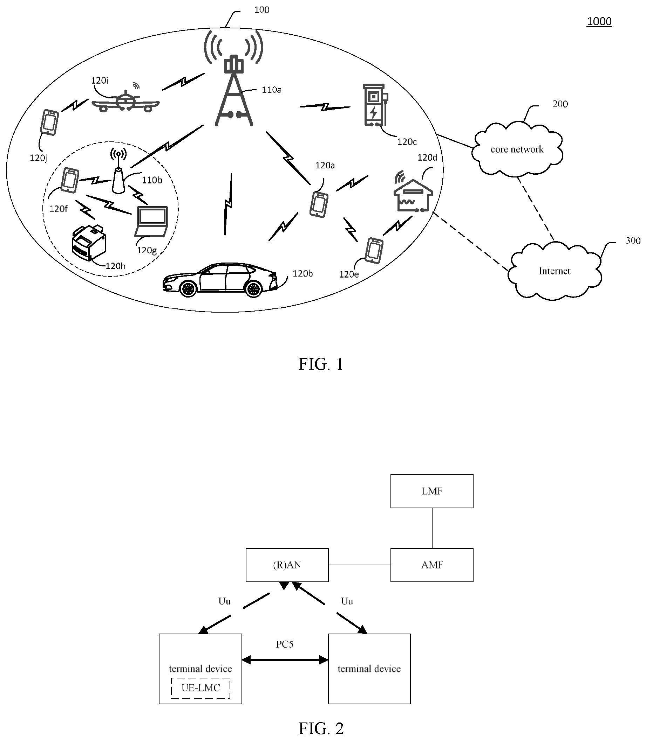

The following provides an example explanation using the system architecture shown in FIG. 1. As shown in FIG. 1, the communication system 1000 includes a radio access network (radio access network, RAN) 100, a core network (core network, CN) 200, and an Internet 300. The RAN 100 includes at least one access network device (for example, 110a and 110b in FIG. 1, collectively referred to as 110) and at least one terminal (for example, 120a-120j in FIG. 1, collectively referred to as 120). The RAN 100 may further include other RAN nodes, for example, a wireless relay device and/or a wireless backhaul device (not shown in FIG. 1). The terminal 120 is wirelessly connected to the access network device 110. The access network device 110 is connected to the core network 200 in a wireless or wired manner. The core network device in the core network 200 and the access network device 110 in the RAN 100 may be different physical devices, or may be the same physical device integrating logical functions of the core network and logical functions of the radio access network.

It should be noted that the RAN 100 may be a cellular system related to the 3rd Generation Partnership Project (3rd generation partnership project, 3GPP), for example, a 4G or 5G mobile communication system, or an evolved system after 5G (for example, a 6G mobile communication system). The RAN 100 may also be an open access network (open RAN, O-RAN, or ORAN), a cloud radio access network (cloud radio access network, CRAN), or the like. The RAN 100 may also be a communications system obtained by converging two or more of the foregoing systems. It should be noted that the number of access network devices and the number of terminal devices in FIG. 1 are merely examples, and should not be considered as a specific limitation on this application. The following further provides a detailed description of the terminal device and the network device involved in the system architecture.

### 1. Terminal Device

The terminal device may also be referred to as user equipment (user equipment, UE), a mobile station (mobile station, MS), a mobile terminal (mobile terminal, MT), or a device used to provide voice or data connectivity to users, or may be an Internet of Things (IoT) device. For example, the terminal device includes handheld devices, vehicle-mounted devices, and the like that have wireless connection capabilities. Currently, the terminal device may be a mobile phone, a tablet computer, a notebook computer, a palmtop computer, a mobile internet device (mobile internet device, MID), a wearable device (e.g., a smartwatch, a smart band, a pedometer, etc.), a vehicle-mounted device (e.g., an automobile, a bicycle, an electric vehicle, an airplane, a ship, a train, a high-speed train, etc.), a satellite terminal, a virtual reality (virtual reality, VR) device, an augmented reality (augmented reality, AR) device, an intelligent point of sale (point of sale, POS) device, a customer-premises equipment (customer-premises equipment, CPE), a wireless terminal in industrial control, a smart home device (e.g., a refrigerator, a television, an air conditioner, an electricity meter, etc.), an intelligent robot, an industrial robot arm, workshop equipment, a wireless terminal in autonomous driving, a wireless terminal in telemedicine, a wireless terminal in smart grids (smart grid), a wireless terminal in transportation safety, a wireless terminal in smart cities, a wireless terminal in smart homes, flying devices (e.g., an intelligent robot, a hot air balloon, an unmanned aerial vehicle, an airplane), and the like. The terminal device may also be another device with terminal functions, for example, the terminal device may also be a device that serves as a terminal in D2D communication.

The embodiments of this application do not limit the device form of the terminal. The apparatus configured to implement the functions of the terminal device may be the terminal device itself, or may be an apparatus capable of supporting the terminal device in implementing the function, such as a chip system. This apparatus may be installed in the terminal device or used in conjunction with the terminal device. In the embodiments of this application, the chip system may be composed of a chip, or may include a chip and other discrete components.

### 2. Access Network Device

The access network device is a node in a radio access network (radio access network, RAN), which may also be referred to as a network device or a RAN node (or device). The access network device is configured to assist terminals in achieving wireless access. The multiple access network devices 110 in the communication system 1000 may be nodes of the same type, or may be nodes of different types. In some scenarios, the roles of the access network device 110 and the terminal 120 are relative to each other. For example, in FIG. 1, network element 120i may be an aircraft or an unmanned aerial vehicle (UAV), which may be configured as a mobile base station. For terminals 120j that access the RAN 100 through network element 120i, network element 120i functions as a base station; however, for the base station 110a, network element 120i functions as a terminal. The access network device 110 and the terminal 120 are sometimes collectively referred to as communication apparatuses. For instance, in FIG. 1, network elements 110a and 110b may be understood as communication apparatuses with base station functions, while network elements 120a-120j may be understood as communication apparatuses with terminal functions.

In a possible scenario, the access network device may be a base station (base station), an evolved NodeB (evolved NodeB, eNodeB), a transmitting and receiving point (transmitting and receiving point, TRP), a transmission point (transmitting point, TP), a next generation NodeB (next generation NodeB, gNB), a next generation base station in a sixth generation (6th generation, 6G) mobile communications system, a base station in a future mobile communications system, a satellite, an integrated access and backhaul (integrated access and backhaul, IAB) node, a mobile switching center, an access network device in a non-terrestrial network (non-terrestrial network, NTN) communication system, which may be deployed on an unmanned aerial vehicle (UAV) or a satellite, or the like. The access network device may be a macro base station (for example, 110a in FIG. 1), a micro base station or an indoor station (for example, 110b in FIG. 1), a relay node or a donor node, or a radio controller in a CRAN scenario. The access network device may also be a device that functions as a base station in device-to-device (device to device, D2D) communication, internet of vehicles communication, unmanned aerial vehicle communication, or machine-type communication. Optionally, the access network device may also be a server, a wearable device, a vehicle, a vehicle-mounted device, or the like. For example, the access network device in the vehicle to everything (vehicle to everything, V2X) technology may be a road side unit (road side unit, RSU).

All or some functions of the access network device in this application may alternatively be implemented by using software functions running on hardware, or implemented by using virtualized functions instantiated on a platform (for example, a cloud platform). The access network device in this application may alternatively be a logical node, a logical module, or software that can implement all or some functions of the access network device.

In another possible scenario, a plurality of access network devices cooperate to assist the terminal in implementing wireless access, and different access network devices separately implement some functions of the base station. For example, the access network device may be a centralized unit (central unit, CU), a distributed unit (distributed unit, DU), a CU-control plane (control plane, CP), a CU-user plane (user plane, UP), or a radio unit (radio unit, RU) etc. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be divided into an access network device in an access network RAN, or the CU may be divided into an access network device in a core network CN. This is not limited herein.

In different systems, the CU (or the CU-CP and the CU-UP), the DU, or the RU may also have different names, but a person skilled in the art can understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses the CU, the CU-CP, the CU-UP, the DU, and the RU as examples for description. Any one of the units of the CU (or the CU-CP, the CU-UP), the DU, and the RU in this application may be implemented by using a software module, a hardware module, or a combination of a software module and a hardware module.

In the embodiments of this application, a form of the access network device is not limited. An apparatus configured to implement a function of the access network device may be an access network device, or may be an apparatus that can support the access network device in implementing the function, for example, a chip system. The apparatus may be installed in the access network device or used in a matching manner with the access network device.

### 3. Core Network Device

The core network device may include an access and mobility management function (access and mobility management function, AMF) network element, a session management function (session management function, SMF) network element, a location management function (location management function, LMF) network element, and the like.

The access and mobility management function network element is primarily responsible for functions such as mobility management and access authentication/authorization. In a 5G communication system, this session management network element may be an AMF network element. In future communication systems, the access and mobility management function network element may still be an AMF network element, or it may have other names, which is not limited in this application.

The session management function network element is mainly used for session management, allocation and management of an internet protocol (internet protocol, IP) address for a terminal, selection and management of a user plane function, termination of interfaces for policy control and charging functions, downlink data notification, and the like. In a 5G communication system, the session management network element may be an SMF network element. In future communication systems, the session management network element may still be an SMF network element, or it may have other names, which is not limited in this application. In the embodiments of this application, the SMF network element may provide a sensing function for the terminal.

The location management function network element is primarily used for calculating and providing feedback on location information within a network, offering functions such as positioning process management, terminal capability acquisition, auxiliary data provision, and terminal location estimation. In 5G communication systems, the location management function network element may be an LMF (Location Management Function) network element. In future communication systems, the access and mobility management function network element may still be an LMF network element, or it may have other names, which is not limited in this application. In the embodiments of this application, the LMF network element may provide positioning functions for terminals.

Furthermore, referring to FIG. 2, FIG. 2 is a schematic diagram of a network architecture according to an embodiment of this application. As shown in FIG. 2, in a positioning scenario, a terminal may send a positioning service request to an access network device, and the access network device forwards the positioning service request of the terminal to an AMF network element in the core network. After receiving the positioning service request, the AMF network element may send the request to an LMF network element, which is responsible for processing the received positioning request and initiating a related positioning procedure. In the embodiments of this application, the terminal and the access network device may transmit and receive reference signals, measure the received reference signals to obtain the carrier phase information of the reference signals, and report the information to the AMF network element in the core network. After receiving the carrier phase information of the reference signals from the terminal and the access network device, the AMF network element may send the information to the LMF network element. The LMF network element then determines the variation in the reference signal carrier phase of the to-be-detected device based on the carrier phase information of the reference signals from the terminal and the access network device.

Optionally, the terminal may further include a user equipment location management function (user equipment location management component, UE-LMC). The UE-LMC is a possible deployment manner, and is a component/application deployed on the terminal device and having some functions of the LMF, and is configured to support a positioning service on a PC5 interface. It should be noted that the embodiments of this application may also be applied to communication between a remote UE (remote UE) and a relay UE (relay UE) in a UE-to-network relay (UE-to-network relay) scenario, or may be applied to communication between a source UE (source UE) and a relay UE (relay UE) in a UE-to-UE relay (UE-to-UE relay) scenario, or may be applied to communication between a relay UE (relay UE) and a target UE (target UE). The embodiments of this application use an example of being applied to an NR communication scenario for description, and do not limit an application scenario.

It should be noted that the quantity and types of the access network device, the core network, and the terminal included in the network architecture shown in FIG. 1 are merely examples, and this embodiment of this application is not limited thereto. For example, the network architecture may further include more or fewer terminals communicating with the access network device, or may further include more or fewer access network devices communicating with the terminal. For example, the network architecture may include one or more access network devices and one or more terminals. A single access network device may transmit data or control signaling to one or more terminals, or a plurality of access network devices may simultaneously transmit data or control signaling to a single terminal. For brevity, these are not described one by one in the accompanying drawings. In addition, in the system architecture shown in FIG. 1, although the access network device, the terminal, and the core network are shown, an application scenario may not be limited to including the access network device, the terminal, and the core network. For example, the application scenario may further include a device for carrying virtualized network functions, or the like. These are obvious to a person skilled in the art, and details are not described herein again.

To facilitate understanding of the embodiments of this application, the technical problems specifically to be resolved in this application are further analyzed and proposed.

Currently, in an industrial scenario, there may be no direct line of sight (LOS) between the receiving and transmitting access network devices. Therefore, it is considered that micro-deformation detection in an NLOS scenario may be assisted by terminal movement. Currently, there are multiple technical solutions for assisting micro-deformation detection in an NLOS scenario by means of terminal movement. The following provides some examples:

Micro-deformation detection may be performed by using RTT carrier phase measurement between the terminal and the access network device, and micro-deformation may be determined by using a variation of the RTT carrier phase at different moments. A specific implementation method is as follows:

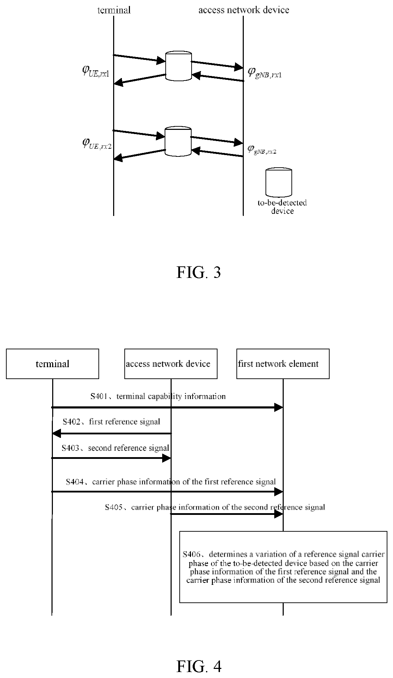

Referring to FIG. 3, FIG. 3 is a schematic diagram of micro-deformation detection based on an RTT carrier phase according to an embodiment of this application. As shown in FIG. 3,

For the access network device side, the phases measured twice are respectively:
${φ}_{gNB , rx 1} = \left(-2πf\left(τ\left({t}_{1}\right)+Δ\left({t}_{1}\right)\right)-\left({∅}_{R 0}\left({t}_{1}\right)-{∅}_{T 1}\left({t}_{1}\right)\right)\right) mod 2 π$
${φ}_{gNB , rx 2} = \left(-2πf\left(τ\left({t}_{2}\right)+Δ\left({t}_{2}\right)\right)-\left({∅}_{R 0}\left({t}_{2}\right)-{∅}_{T 1}\left({t}_{2}\right)\right)\right) mod 2 π$

Here, φ_{*gNB,rx*1} and φ_{*gNB,rx*2} respectively represent the phases measured twice on the access network device side; τ(*t*₁) and τ(*t*₂) respectively represent the delays between the terminal and the object under detection and then to the access network device at two different moments; Δ(*t*₁) and Δ(*t*₂) respectively represent the time synchronization errors at different moments between the terminal and the access network device; Ø_{R0} and Ø_{T1} respectively represent the random initial phase and clock drift deviation between the transmitter and the receiver.

For the terminal side, the phases measured twice are as follows:
${φ}_{UE , rx 1} = \left(-2πf\left(τ\left({t}_{1}\right)-Δ\left({t}_{1}\right)\right)-\left({∅}_{R 1}\left({t}_{1}\right)-{∅}_{T 0}\left({t}_{1}\right)\right)\right) mod 2 π$
${φ}_{UE , rx 2} = \left(-2πf\left(τ\left({t}_{2}\right)-Δ\left({t}_{2}\right)\right)-\left({∅}_{R 1}\left({t}_{2}\right)-{∅}_{T 0}\left({t}_{2}\right)\right)\right) mod 2 π$

Here, *φ*_{*UE,rx*1} and *φ*_{*UE,rx*2} represent the phases measured twice on the terminal side, while Ø_{*R*1} and Ø_{*T*0} represent the random initial phase and clock drift deviation between the transmitter and receiver, respectively.

The measured RTT phases need to be summed to obtain the RTT carrier phases at the two moments, which are as follows:
${φ}_{1} = \left({φ}_{gNB , rx 1}+{φ}_{UE , rx 1}\right) mod 2 π = \left(-4πfτ\left({t}_{1}\right)\right) mod 2 π$
${φ}_{2} = \left({φ}_{gNB , rx 2}+{φ}_{UE , rx 2}\right) mod 2 π = \left(-4πfτ\left({t}_{2}\right)\right) mod 2 π$

Here, *φ*₁ and *φ*₂ represent the RTT carrier phases at two different moments, respectively.

The time synchronization error is eliminated, and if the initial phase difference between transmission and reception is assumed not to change within a short period, the random initial phase error can also be eliminated. Therefore, the deformation of the reflector can be calculated by the difference in RTT carrier phases at different times Δ*d*:
$Δ d = \frac{Δφ}{2 π} λ = \frac{{φ}_{2} - {φ}_{1}}{2 π} λ = \left(-4πfτ\left(Δt\right)\right) mod 2 π$

However, if there are time-varying random initial phase errors and clock drifts, which cannot be eliminated by summing the RTT carrier phases, then the RTT carrier phase can be expressed as follows: ${φ}_{1} = \left({φ}_{gNB , rx 1}+{φ}_{UE , rx 1}\right) mod 2 π = \left(-4πfτ\left({t}_{1}\right)-\left(\begin{matrix}Δ {∅}_{R 0} \left({t}_{1}\right) - \\ Δ {∅}_{T 0} \left({t}_{1}\right)\end{matrix}\right)\right) mod 2 π$ ${φ}_{2} = \left({φ}_{gNB , rx 2}+{φ}_{UE , rx 2}\right) mod 2 π = \left(-4πfτ\left({t}_{2}\right)-\left(\begin{matrix}Δ {∅}_{R 0} \left({t}_{2}\right) - \\ Δ {∅}_{T 0} \left({t}_{2}\right)\end{matrix}\right)\right) mod 2 π$

There is a deviation when the deformation of the reflected object is calculated based on the RTT carrier phase difference at different moments, and therefore, the deformation cannot be correctly reflected:
$Δ d = \frac{Δ φ}{2 π} λ = \frac{{φ}_{2} - {φ}_{1}}{2 π} λ = \left(-4πfτ\left(Δt\right)-\left(Δ{∅}_{R 0}\left(Δt\right)-Δ{∅}_{T 0}\left(Δt\right)\right)\right) mod 2 π$

Disadvantages of this implementation method: Although the micro deformation can be detected in an NLOS scenario with the assistance of terminal movement, the accuracy and effectiveness of the micro deformation detection are relatively low.

Therefore, the technical problem to be resolved in this application may include: detecting the deformation of the target device in an NLOS scenario with the assistance of the terminal, thereby improving the accuracy of detecting the deformation of the target device.

This application proposes a communication method that can detect deformation of a target device in a NLOS scenario with the assistance of a terminal, thereby improving the accuracy of detecting the deformation of the target device. The following will describe this through the embodiments provided below. In the various embodiments of this application, unless otherwise specified or there is a logical conflict, the terms and/or descriptions in different embodiments are consistent and can be mutually referenced, and the technical features in different embodiments may be combined to form a new embodiment based on their inherent logical relationships.

The communication method provided in the embodiments of this application is described below. It may be understood that, in this application, an access network device, a terminal, and a first network element are used as examples of the entities executing the interaction illustration, but the entities executing the interaction illustration are not limited by this application. For example, the method performed by the access network device in this application may also be performed by a module (such as a chip, a chip system, or a processor) applied to the access network device, or may be implemented by a logical node, a logical module, or software that can implement all or a part of the functions of the access network device; the method performed by the terminal in this application may also be performed by a module (such as a chip, a chip system, or a processor) applied to the terminal, or may be implemented by a logical node, a logical module, or software that can implement all or a part of the functions of the terminal; the method performed by the first network element in this application may also be performed by a module (such as a chip, a chip system, or a processor) applied to the first network element, or may be implemented by a logical node, a logical module, or software that can implement all or a part of the functions of the first network element. The first network element may be a session management network element (for example, an SMF network element) or a location management network element (for example, an LMF network element). The following uses the first network element as an example for illustration.

Referring to FIG. 4, FIG. 4 is a schematic interaction diagram of a communication method according to an embodiment of this application. As shown in FIG. 4, the communication method may include at least the following steps.

S401: The terminal sends terminal capability information to the first network element. Correspondingly, the first network element receives the terminal capability information from the terminal.

The terminal capability information may represent the capability of the terminal. The terminal capability information may be the capability information between the terminal transmitting and receiving reference signals, receiving and transmitting reference signals, transmitting and receiving reference signals multiple times, or receiving and transmitting reference signals multiple times (the following will use the example of the terminal transmitting and receiving reference signals for illustration). The details will be elaborated in the following embodiments.

The terminal capability information may include at least one of the following items: an initial phase stability capability, a clock drift stability capability, and a variation of the initial phase. The initial phase stability capability may reflect the change in phase between when the terminal transmits and receives reference signals. If the stability is low, it indicates that there is a deviation in the carrier phase measurement, which leads to a decrease in perceived performance. The clock drift stability capability may reflect the clock jump between when the terminal transmits and receives reference signals. Changes in the clock will cause changes in the phase, and if the stability is low, it indicates that there is a deviation in the carrier phase measurement, which also leads to a decrease in perceived performance. The variation of the initial phase may reflect the change in phase between different transmissions/receivals or multiple transmissions/receivals of reference signals.

In the first possible implementation, the terminal capability information includes an initial phase stability capability and/or a clock drift stability capability. The initial phase stability capability may include at least one of indicating whether the initial phase of the terminal is stable and indicating a time range within which the initial phase of the terminal is stable. For example, the terminal may indicate to the first network element whether the initial phase of the terminal is stable (i.e., the initial phase stability capability), for instance, by indicating the initial phase stability capability of the terminal through whether the change in the terminal's initial phase is less than a threshold; alternatively, the terminal may indicate to the first network element different times and within what time range the initial phase is stable or unstable. The clock drift stability capability includes at least one of indicating whether the clock drift of the terminal is stable and indicating a time range within which the clock drift of the terminal is stable. For example, the terminal may indicate to the first network element whether the clock drift of the terminal is stable (i.e., the clock drift stability capability), for instance, by indicating the clock drift stability capability of the terminal through whether the change in the terminal's clock drift is less than a threshold; alternatively, the terminal may indicate to the first network element different times and within what time range the clock drift is stable or unstable.

In a second possible implementation, the terminal capability information includes a variation of the initial phase. The variation of the initial phase may be within the range of 0-2π (360°), for example, 90°, 180°, 270°, etc. The variation of the initial phase includes the variation of the initial phase corresponding to the time range. For example, the terminal may indicate to the first network element the variation of the initial phase of the terminal within a certain time period, where the variation is a specific value.

In a possible implementation, the terminal sends terminal capability information to the first network element, where the terminal may carry the terminal capability information (such as S404) in the carrier phase information of the first reference signal. Alternatively, it can be understood that the terminal capability information may be included in the measurement result (the carrier phase information of the first reference signal) of the terminal measuring the first reference signal for reporting, which can improve the accuracy of detecting the deformation of the target device in the next detection; or if the terminal has not reported this part of the terminal capability information previously (for example, during the initialization access process), the terminal may also include this terminal capability information in the carrier phase information of the first reference signal for reporting, thereby improving the accuracy of detecting the deformation of the target device in the next detection; or the terminal capability information may be reported only in the RTT carrier phase scenario, thereby reducing the signaling overhead by reporting on demand.

S402: The access network device sends a first reference signal to the terminal. Correspondingly, the terminal receives the first reference signal from the access network device.

S403: The terminal sends a second reference signal to the access network device. Correspondingly, the access network device receives the second reference signal from the terminal.

The reference signal may be a PRS, an SRS, or another reference signal. For example, the first reference signal is a PRS, and the second reference signal is an SRS. A type of the reference signal is not limited in this embodiment of this application.

The terminal and the access network device may exchange reference signals. For example, S402 may be performed first, and then S403 is performed. The access network device may first send the first reference signal to the terminal, and after receiving the first reference signal, the terminal sends the second reference signal to the access network device. For example, S403 may be performed first, and then S402 is performed. The terminal first sends the second reference signal to the access network device, and after receiving the second reference signal, the access network device sends the first reference signal to the terminal. For another example, performing S402 first and then performing S403, or performing S403 first and then performing S402 may be referred to as one round of sending and receiving reference signals between the terminal and the access network device. Optionally, one or more rounds of sending and receiving reference signals may be performed between the terminal and the access network device. For each round of sending and receiving reference signals in the multiple rounds of sending and receiving reference signals, the terminal may first send the second reference signal to the access network device, or the access network device may first send the first reference signal to the terminal. This is not limited.

S404: The terminal sends the carrier phase information of the first reference signal to the first network element. Correspondingly, the first network element receives the carrier phase information of the first reference signal from the terminal.

After receiving the first reference signal from the access network device, the terminal may measure the first reference signal to obtain the carrier phase information of the first reference signal and report it to the first network element. Optionally, the terminal may transparently transmit the carrier phase information of the first reference signal to the first network element through the access network device (for example, by using an LTE positioning protocol (LTE positioning protocol, LPP) message). Optionally, the carrier phase information of the first reference signal may include terminal capability information.

S405: The access network device sends the carrier phase information of the second reference signal to the first network element. Correspondingly, the first network element receives the carrier phase information of the second reference signal from the access network device.

After receiving the second reference signal from the terminal, the access network device may measure the second reference signal to obtain the carrier phase information of the second reference signal and report it (for example, through an NR positioning protocol (NR positioning protocol annex, NRPPA) message) to the first network element.

S406: The first network element determines a variation of a reference signal carrier phase of the to-be-detected device based on the carrier phase information of the first reference signal and the carrier phase information of the second reference signal.

After the first network element separately receives the carrier phase information of the first reference signal from the terminal and the carrier phase information of the second reference signal from the access network device, the first network element may determine the variation of the reference signal carrier phase of the to-be-detected device based on the carrier phase information of the first reference signal and the carrier phase information of the second reference signal. Alternatively, it may be understood that the first network element determines the deformation of the to-be-detected device based on the carrier phase information of the first reference signal and the carrier phase information of the second reference signal, or it may be understood that the first network element performs deformation detection on the to-be-detected device based on the carrier phase information of the first reference signal and the carrier phase information of the second reference signal. For the detection of minute deformations, it may also be referred to as micro-deformation detection. It can be understood that the embodiments of this application are not limited to the detection of micro-deformations, but may also be applicable to scenarios such as RTT carrier phase positioning, which is not limited herein.

In the embodiments of this application, the variation of the reference signal carrier phase of the to-be-detected device is determined by taking into account the terminal capability information, thereby making the detection of the deformation of the target device more accurate. Specifically, the following two implementation examples may be used as illustrative examples:

In a first possible implementation, the first network element may receive terminal capability information from the terminal, so that the time interval for transmitting and receiving signals between the terminal and the access network device can be configured based on the terminal capability information. For example, the time interval between the terminal receiving the first reference signal and transmitting the second reference signal, or the time interval between the access device receiving the second reference signal and transmitting the first reference signal. This is done to avoid, as much as possible, the time when the terminal's performance is unstable, thereby minimizing the transmission and reception of signals with the access network device, so that the first network element can accurately determine the variation of the reference signal carrier phase of the to-be-detected device based on the carrier phase information of the signals reported by the terminal and the access network device.

In a second possible implementation, the first network element may receive terminal capability information from the terminal, thereby being able to determine the variation of the reference signal carrier phase of the to-be-detected device based on the compensation of the carrier phase information of the signals reported by the terminal and the access network device according to the terminal capability information, thereby making the detection of the deformation of the target device more accurate.

It is understandable that the various numerical designations in the embodiments of this application are merely for the purpose of differentiation for ease of description, and are not intended to limit the scope of the embodiments of this application. The sequence numbers of the foregoing processes do not necessarily indicate the order of execution. For example, the execution order of S402 and S403 is not limited, and the execution order of S404 and S405 may also not be limited. The execution order of each process should be determined based on its function and internal logic.

In summary, through the communication method illustrated in FIG. 4, the terminal can report the terminal capability information, so that the first network element can configure the time interval for the terminal to transmit and receive signals (as mentioned in this embodiment, the terminal sends a second reference signal to the access network device, and the access network device sends a first reference signal to the terminal) between the terminal and the access network device based on the terminal capability information. This is done to avoid transmitting and receiving signals with the access network device during periods when the terminal's performance is unstable, thereby ensuring that the first network element accurately determines the variation in the reference signal carrier phase of the to-be-detected device based on the carrier phase information of the signals reported by the terminal and the access network device. Alternatively, the first network element can compensate the carrier phase information of the signals reported by the terminal and the access network device based on the terminal capability information to determine the variation in the reference signal carrier phase of the to-be-detected device. Therefore, in the embodiments of this application, the variation in the reference signal carrier phase of the to-be-detected device is determined by incorporating the terminal capability information, which makes the detection of the deformation of the target device more accurate. The detection of the deformation of the target device in NLOS scenarios can be achieved with the assistance of the terminal, thereby improving the accuracy of detecting the deformation of the target device.

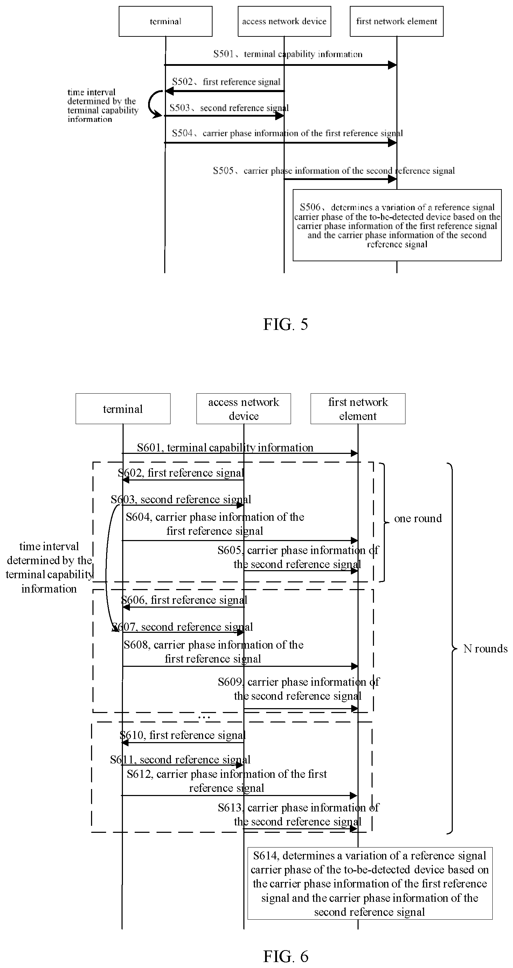

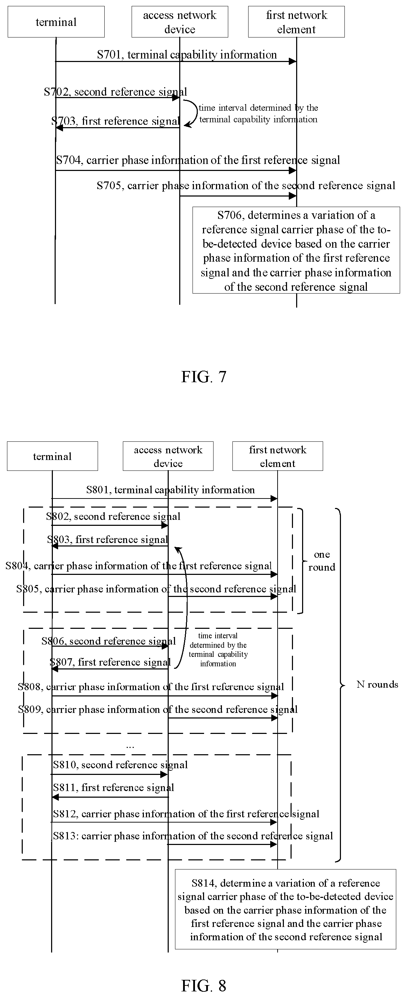

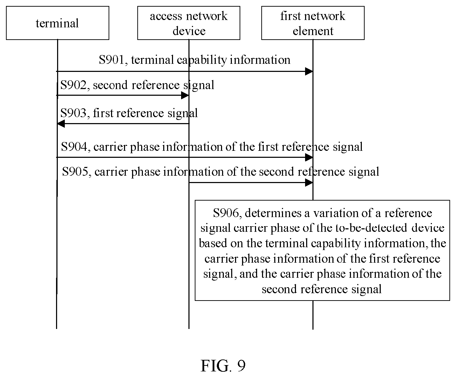

For the method embodiment shown in FIG. 4, for specific implementations and beneficial effects, refer to the descriptions of FIG. 5 to FIG. 10 below. In other words, the embodiments shown in FIG. 5 to FIG. 10 are specific implementations of the embodiment shown in FIG. 4. To avoid redundancy, these embodiments are not described in detail in the embodiment of FIG. 4. The method embodiments in FIG. 5 to FIG. 6 may correspond to the first possible implementation of the terminal capability information in step S401, that is, the terminal may receive the first reference signal from the access network device based on the terminal capability information, and send the second reference signal to the access network device. The method embodiments in FIG. 7 to FIG. 8 may correspond to the first possible implementation of the terminal capability information in step S401, that is, the access network device may receive the second reference signal from the terminal based on the terminal capability information, and send the first reference signal to the terminal. The method embodiments in FIG. 9 to FIG. 10 may correspond to the second possible implementation of the terminal capability information in step S401.

The following describes a communication method provided in an embodiment of this application. Referring to FIG. 5, FIG. 5 is a schematic interaction diagram of a communication method according to an embodiment of this application. In this embodiment, the access network device may first send a first reference signal to the terminal, and after receiving the first reference signal, the terminal sends a second reference signal to the access network device. As shown in FIG. 5, the communication method may include at least the following steps.

S501: The terminal sends terminal capability information to the first network element. Correspondingly, the first network element receives the terminal capability information from the terminal.

It can be understood that S501 corresponds to S401, and for the related descriptions in S501, reference may be made to the descriptions of S401 above, which will not be repeated herein.

S502: The access network device sends a first reference signal to the terminal. Correspondingly, the terminal receives the first reference signal from the access network device.

It can be understood that S502 corresponds to S402, and for the related descriptions in S502, reference may be made to the descriptions of S402 above, which will not be repeated herein.

S503: The terminal sends a second reference signal to the access network device based on the time interval determined by the terminal capability information. Correspondingly, the access network device receives the second reference signal from the terminal.

After receiving the first reference signal from the access network device, the terminal may send a second reference signal to the access network device based on a time interval determined by the terminal capability information (for example, determining the time interval based on the initial phase stability capability and/or the clock drift stability capability). This time interval may be understood as a time interval determined by the first network element based on the terminal capability information, where the time interval is an interval between the terminal receiving the first reference signal and sending the second reference signal.

Optionally, the access network device may send first configuration information to the terminal, where the first configuration information configures a resource for the second reference signal, so that the terminal can send the second reference signal to the access network device based on the first configuration information. The first configuration information may include the aforementioned time interval. That is, after the first network element determines the time interval between receiving the first reference signal and sending the second reference signal based on the terminal capability information, the first network element may send the time interval to the access network device, and the access network device may send the time interval to the terminal by configuring the first configuration information for the second reference signal resource to carry the time interval. Optionally, the first network element may send the time interval to the access network device by configuring the third configuration information for the first reference signal resource to carry the time interval, and then the access network device may send the time interval to the terminal. Optionally, the first network element may send second configuration information to the terminal, where the second configuration information configures a resource for the first reference signal, so that the terminal can receive the first reference signal from the access network device based on the second configuration information. The second configuration information may include the aforementioned time interval. That is, after the first network element determines the time interval between receiving the first reference signal and sending the second reference signal based on the terminal capability information, the first network element may send the time interval to the terminal.

S504: The terminal sends the carrier phase information of the first reference signal to the first network element. Correspondingly, the first network element receives the carrier phase information of the first reference signal from the terminal.

It can be understood that S504 corresponds to S404. For related descriptions in S504, refer to the descriptions of S404 above, and no further details will be provided here.

S505: The access network device sends the carrier phase information of the second reference signal to the first network element. Correspondingly, the first network element receives the carrier phase information of the second reference signal from the access network device.

It can be understood that S505 corresponds to S405, and the relevant descriptions in S505 can be referred to the descriptions of S405 above, which will not be repeated here.

S506: The first network element determines a variation of a reference signal carrier phase of the to-be-detected device based on the carrier phase information of the first reference signal and the carrier phase information of the second reference signal.

It can be understood that S506 corresponds to S406. For related descriptions in S506, refer to the descriptions of S406 above, and details will not be repeated here.

In summary, through the communication method illustrated in FIG. 5, the terminal can exchange signals with the access network device based on the terminal capability information. For example, after receiving the first reference signal, the terminal sends the second reference signal to the access network device according to the time interval determined by the terminal capability information. The terminal measures the first reference signal and reports the carrier phase information of the first reference signal obtained through measurement to the first network element. The access network device measures the second reference signal and reports the carrier phase information of the second reference signal obtained through measurement to the first network element, so that the first network element can determine the variation of the reference signal carrier phase of the to-be-detected device. Therefore, the terminal sends the second reference signal to the access network device according to the time interval, thereby avoiding, as much as possible, exchanging signals with the access network device during periods when the terminal's performance is unstable, so that the first network element can accurately determine the variation of the reference signal carrier phase of the to-be-detected device based on the carrier phase information of the signals reported by the terminal and the access network device. In this embodiment, the variation of the reference signal carrier phase of the to-be-detected device is determined by taking into account the terminal capability information, which makes the detection of the deformation of the target device more accurate.

The following describes a communication method provided by an embodiment of this application. Referring to FIG. 6, FIG. 6 is a schematic interaction diagram of another communication method according to an embodiment of this application. In this embodiment, the access network device may first send a first reference signal to the terminal, and after receiving the first reference signal, the terminal sends a second reference signal to the access network device. Multiple rounds of signal transmission and reception may be performed between the terminal and the access network device, where the case of multiple rounds may be applicable to an RTT carrier phase measurement scenario, for example. As shown in FIG. 6, the communication method may include at least the following steps.

S601: The terminal sends terminal capability information to the first network element. Correspondingly, the first network element receives the terminal capability information from the terminal.

It can be understood that S601 corresponds to S401, and for the related descriptions in S601, reference may be made to the descriptions of S401 above, which will not be repeated here.

S602: The access network device sends a first reference signal to the terminal. Correspondingly, the terminal receives the first reference signal from the access network device.

It can be understood that S602 corresponds to S402. For related descriptions in S602, refer to the descriptions of S402 above, and details will not be repeated here.

S603: The terminal sends a second reference signal to the access network device. Correspondingly, the access network device receives the second reference signal from the terminal.

It can be understood that S603 corresponds to S403. For related descriptions in S603, refer to the descriptions of S403 above, and details will not be repeated here.

Additionally, in a possible implementation, the terminal may also send the second reference signal to the access network device based on a time interval determined by the terminal capability information. For specific descriptions, refer to the description of S503 above, and details will not be repeated here.

S604: The terminal sends carrier phase information of the first reference signal to the first network element. Correspondingly, the first network element receives the carrier phase information of the first reference signal from the terminal. It can be understood that S604 corresponds to S404. For related descriptions in S604, refer to the description of S404 above, and details will not be repeated here.

S605: The access network device sends the carrier phase information of the second reference signal to the first network element. Correspondingly, the first network element receives the carrier phase information of the second reference signal from the access network device. It can be understood that S605 corresponds to S405, and for the relevant descriptions in S605, reference may be made to the descriptions of S405 above, which will not be repeated here.

Among them, S602 to S605 may be understood as a round of signal transmission and reception between the terminal and the access network device. The following S606 to S609 and S610 to S613 correspond to multiple rounds of signal transmission and reception between the terminal and the access network device, where each round of signal transmission and reception between the terminal and the access network device is a repetition of the process described in S602 to S605. The difference lies in the fact that the terminal may send the second reference signal to the access network device in each round based on the time interval between receiving the first reference signal and sending the second reference signal, or the terminal may send the second reference signal in adjacent rounds of multiple rounds, where the terminal may send the second reference signal in the current round based on the time interval between sending the second reference signal in the current round and sending the second reference signal in the previous round. The following S607 and S611 illustrate this using the time interval between each two adjacent transmissions of the second reference signal as an example.

S606: The access network device sends the first reference signal to the terminal. Correspondingly, the terminal receives the first reference signal from the access network device.

It can be understood that S606 corresponds to S402. For related descriptions in S606, refer to the descriptions of S402 above, and details will not be repeated here.

S607: The terminal sends a second reference signal to the access network device based on the time interval determined by the terminal capability information. Correspondingly, the access network device receives the second reference signal from the terminal.

During each round of signal transmission and reception between the terminal and the access network device, after the terminal receives the first reference signal from the access network device, the terminal may send a second reference signal to the access network device based on a time interval determined by the terminal capability information. This time interval may be understood as a time interval determined by the first network element based on the terminal capability information. The time interval is an interval between two adjacent times of sending the second reference signal by the terminal in the N times of sending the second reference signal (e.g., the time interval between S607 and S603).

S608: The terminal sends the carrier phase information of the first reference signal to the first network element. Correspondingly, the first network element receives the carrier phase information of the first reference signal from the terminal. It can be understood that S608 corresponds to S404. For related descriptions in S608, refer to the descriptions of S404 above, and details will not be repeated here.

S609: The access network device sends the carrier phase information of the second reference signal to the first network element. Correspondingly, the first network element receives the carrier phase information of the second reference signal from the access network device. It can be understood that S609 corresponds to S405. For related descriptions in S609, refer to the descriptions of S405 above, and details will not be repeated here.

It is understandable that, in the multi-round process of signal transmission and reception between the terminal and the access network device, steps S610 to S613 are repeated executions of steps S606 to S609, so they will not be further elaborated here.

S614: The first network element determines a variation of a reference signal carrier phase of the to-be-detected device based on the carrier phase information of the first reference signal and the carrier phase information of the second reference signal.

After the first network element receives the carrier phase information of the first reference signal from the terminal and the carrier phase information of the second reference signal from the access network device multiple times separately, it may determine the variation of the reference signal carrier phase of the to-be-detected device based on the carrier phase information of the multiple first reference signals and the carrier phase information of the multiple second reference signals.

In summary, through the communication method illustrated in FIG. 6, the terminal can perform multiple rounds of signal transmission and reception with the access network device based on the terminal capability information. The scenario of multiple rounds may, for example, be applicable to RTT carrier phase measurement, thereby making the scenario where the variation of the reference signal carrier phase of the to-be-detected device is determined by combining the terminal capability information more widely applicable. Additionally, the terminal sends the second reference signal to the access device based on the time interval between each two adjacent transmissions of the second reference signal, which is determined by the terminal capability information. This approach helps avoid signal transmission and reception with the access network device during periods when the terminal's performance is unstable, ensuring that the first network element accurately determines the variation of the reference signal carrier phase of the to-be-detected device based on the carrier phase information of the signals reported by the terminal and the access network device. In this embodiment, the determination of the variation of the reference signal carrier phase of the to-be-detected device is combined with the terminal capability information, thereby making the detection of the deformation of the target device more accurate.

The following describes a communication method provided in an embodiment of this application. Referring to FIG. 7, FIG. 7 is a schematic interaction diagram of still another communication method according to an embodiment of this application. In this embodiment, the terminal may first send a second reference signal to an access network device, and after receiving the second reference signal, the access network device sends a first reference signal to the terminal. As shown in FIG. 7, the communication method may include at least the following steps.

S701: The terminal sends terminal capability information to the first network element. Correspondingly, the first network element receives the terminal capability information from the terminal.

It can be understood that S701 corresponds to S401, and for related descriptions in S701, reference may be made to the descriptions of S401 above, which will not be repeated herein.

S702: The terminal sends a second reference signal to the access network device. Correspondingly, the access network device receives the second reference signal from the terminal.

S703: The access network device sends a first reference signal to the terminal based on the time interval determined by the terminal capability information. Correspondingly, the terminal receives the first reference signal from the access network device.

After receiving the second reference signal from the terminal, the access network device may send the first reference signal to the terminal based on the time interval determined by the terminal capability information. The time interval may be understood as being determined by the first network element based on the terminal capability information, and the time interval is an interval between receiving the second reference signal by the access network device and sending the first reference signal by the access network device.

Optionally, the access network device may send first configuration information to the terminal, where the first configuration information configures a resource for the second reference signal, so that the terminal can send the second reference signal to the access network device according to the first configuration information. Optionally, the first network element may send third configuration information to the access network device, where the third configuration information configures a resource for the first reference signal, so that the access network device can send the first reference signal according to the third configuration information. The third configuration information may include the aforementioned time interval. In other words, the first network element may determine, based on the terminal capability information, the time interval between the access network device receiving the second reference signal and sending the first reference signal, and send this time interval to the access network device through the third configuration information.

S704: The terminal sends the carrier phase information of the first reference signal to the first network element. Correspondingly, the first network element receives the carrier phase information of the first reference signal from the terminal. It can be understood that S704 corresponds to S404. For related descriptions in S704, refer to the descriptions of S404 above, and details will not be repeated here.

S705: The access network device sends the carrier phase information of the second reference signal to the first network element. Correspondingly, the first network element receives the carrier phase information of the second reference signal from the access network device. It can be understood that S705 corresponds to S405. For related descriptions in S705, refer to the descriptions of S405 above, and details will not be repeated here.

S706: The first network element determines a variation of a reference signal carrier phase of the to-be-detected device based on the carrier phase information of the first reference signal and the carrier phase information of the second reference signal. It can be understood that S706 corresponds to S406. For related descriptions in S706, refer to the descriptions of S406 above, and details will not be repeated here.

In summary, through the communication method illustrated in FIG. 7, the access network device can exchange signals with the terminal based on the terminal capability information. For example, after receiving the second reference signal, the access network device sends the first reference signal to the terminal according to the time interval determined by the terminal capability information. The terminal measures the first reference signal and reports the carrier phase information of the first reference signal obtained from the measurement to the first network element. The access network device measures the second reference signal and reports the carrier phase information of the second reference signal obtained from the measurement to the first network element, so that the first network element can determine the variation in the reference signal carrier phase of the device to be detected. Therefore, the access network device sends the first reference signal to the terminal based on the time interval, thereby avoiding, as much as possible, the period when the terminal's performance is unstable, and exchanging signals with the access network device, so that the first network element can accurately determine the variation in the reference signal carrier phase of the device to be detected based on the carrier phase information of the signals reported by the terminal and the access network device. In this embodiment, the variation in the reference signal carrier phase of the device to be detected is determined by incorporating the terminal capability information, which makes the detection of the deformation of the target device more accurate.

The following describes a communication method provided by an embodiment of this application. Referring to FIG. 8, FIG. 8 is a schematic interaction diagram of still another communication method according to an embodiment of this application. In this embodiment, the terminal may first send a second reference signal to the access network device, and after receiving the second reference signal, the access network device sends a first reference signal to the terminal. Multiple rounds of signal transmission and reception may be performed between the terminal and the access network device, where the case of multiple rounds may be applicable to an RTT carrier phase measurement scenario, for example. As shown in FIG. 8, the communication method may include at least the following steps.

S801: The terminal sends terminal capability information to the first network element. Correspondingly, the first network element receives the terminal capability information from the terminal.

It can be understood that S801 corresponds to S401. For related descriptions in S801, refer to the descriptions of S401 above, and details are not repeated herein.

S802: The terminal sends a second reference signal to the access network device. Correspondingly, the access network device receives the second reference signal from the terminal.

It can be understood that S802 corresponds to S403. For related descriptions in S802, refer to the descriptions of S403 above, and details will not be repeated here.

S803: The access network device sends a first reference signal to the terminal. Correspondingly, the terminal receives the first reference signal from the access network device.

It can be understood that S803 corresponds to S402, and for related descriptions in S803, refer to the descriptions of S402 above, which will not be repeated here.

Additionally, in a possible implementation, the access network device may also send the first reference signal to the terminal based on a time interval determined by the terminal capability information. For specific descriptions, refer to the description of S703 above, which will not be repeated here.

S804: The terminal sends carrier phase information of the first reference signal to the first network element. Correspondingly, the first network element receives the carrier phase information of the first reference signal from the terminal. It can be understood that S804 corresponds to S404, and for related descriptions in S804, refer to the description of S404 above, which will not be repeated here.

S805. The access network device sends the carrier phase information of the second reference signal to the first network element. Correspondingly, the first network element receives the carrier phase information of the second reference signal from the access network device. It can be understood that S805 corresponds to S405. For related descriptions in S805, refer to the descriptions of S405 above, and details will not be repeated here.

Among them, S802 to S805 may be understood as a round of signal transmission and reception between the access network device and the terminal. The following S806 to S809 and S810 to S813 correspond to multiple rounds of signal transmission and reception between the access network device and the terminal, where each round of signal transmission and reception between the access network device and the terminal is a repeated process, as described above. The difference lies in the fact that in each round, the access network device may send the first reference signal to the terminal based on the time interval between receiving the second reference signal and sending the first reference signal, or the access network device may send the first reference signal in adjacent rounds of multiple rounds. When the access network device sends the first reference signal in the current round, it may send the first reference signal based on the time interval between sending the first reference signal in the current round and sending the first reference signal in the previous round. The following S807 and S811 illustrate this using the time interval between each two adjacent transmissions of the first reference signal as an example.

S806: The terminal sends a second reference signal to the access network device. Correspondingly, the access network device receives the second reference signal from the terminal. It can be understood that S806 corresponds to S403. For related descriptions in S806, refer to the descriptions of S403 above, and details will not be repeated here.

S807: The access network device sends a first reference signal to the terminal based on the time interval determined by the terminal capability information. Correspondingly, the terminal receives the first reference signal from the access network device.

When each round of signal transmission and reception occurs between the access network device and the terminal, after the access network device receives the second reference signal from the terminal, the access network device may send the first reference signal to the terminal based on a time interval determined by the terminal capability information. This time interval may be understood as a time interval determined by the first network element based on the terminal capability information, where the time interval is an interval between every two adjacent transmissions of the first reference signal by the access network device (for example, the time interval between S807 and S803).

S808: The terminal sends the carrier phase information of the first reference signal to the first network element. Correspondingly, the first network element receives the carrier phase information of the first reference signal from the terminal. It can be understood that S808 corresponds to S404. For related descriptions in S808, refer to the descriptions of S404 above, and details will not be repeated here.

S809: The access network device sends the carrier phase information of the second reference signal to the first network element. Correspondingly, the first network element receives the carrier phase information of the second reference signal from the access network device. It can be understood that S809 corresponds to S405. For related descriptions in S809, refer to the descriptions of S405 above, and details will not be repeated here.

It is understandable that, in the multi-round process of signal transmission and reception between the terminal and the access network device, steps S810 to S813 are repeated executions of steps S806 to S809, so they will not be further elaborated here.

S814: The first network element determines a variation of a reference signal carrier phase of the to-be-detected device based on the carrier phase information of the first reference signal and the carrier phase information of the second reference signal.

After the first network element receives the carrier phase information of the first reference signal from the terminal and the carrier phase information of the second reference signal from the access network device multiple times separately, the first network element may determine the variation of the reference signal carrier phase of the to-be-detected device based on the carrier phase information of the multiple first reference signals and the carrier phase information of the multiple second reference signals.

In summary, through the communication method illustrated in FIG. 8, the access network device can perform multiple rounds of signal transmission and reception with the terminal based on the terminal capability information. The scenario of multiple rounds can, for example, be applied to situations suitable for RTT carrier phase measurement. This approach, which combines the terminal capability information to determine the variation of the reference signal carrier phase of the to-be-detected device, is thus applicable to a broader range of scenarios. Additionally, the access network device sends the first reference signal to the terminal based on the time intervals between each two consecutive transmissions of the first reference signal, which are determined by the terminal capability information, thereby striving to avoid the periods when the terminal's performance is unstable, and thus minimizing the chances of signal transmission and reception between the terminal and the access network device during these times. This ensures that the variation of the reference signal carrier phase of the to-be-detected device, determined by the first network element based on the carrier phase information of the signals reported by the terminal and the access network device, is accurate. In this embodiment, the determination of the variation of the reference signal carrier phase of the to-be-detected device is combined with the terminal capability information, making the detection of the deformation of the target device more accurate.

The following describes a communication method provided in an embodiment of this application. Referring to FIG. 9, FIG. 9 is a schematic interaction diagram of still another communication method according to an embodiment of this application. It should be noted that, in this embodiment, the terminal may first send a second reference signal to the access network device, and after receiving the second reference signal, the access network device sends a first reference signal to the terminal. Alternatively, the access network device may first send the first reference signal to the terminal, and after receiving the first reference signal, the terminal sends the second reference signal to the access network device. FIG. 9 is described by using an example in which the terminal may first send the second reference signal to the access network device, and after receiving the second reference signal, the access network device sends the first reference signal to the terminal. As shown in FIG. 9, the communication method may include at least the following steps.

S901: The terminal sends terminal capability information to the first network element. Correspondingly, the first network element receives the terminal capability information from the terminal.

It can be understood that S901 corresponds to S401, and for related descriptions in S901, reference may be made to the descriptions of S401 above, which will not be repeated herein.

S902: The terminal sends a second reference signal to the access network device. Correspondingly, the access network device receives the second reference signal from the terminal.

It can be understood that S902 corresponds to S403. For related descriptions in S902, refer to the descriptions of S403 above, and details are not repeated here.

S903: The access network device sends a first reference signal to the terminal. Correspondingly, the terminal receives the first reference signal from the access network device.

It can be understood that S903 corresponds to S402, and the relevant descriptions in S903 can be referred to the descriptions of S402 above, which will not be repeated here.

S904: The terminal sends the carrier phase information of the first reference signal to the first network element. Correspondingly, the first network element receives the carrier phase information of the first reference signal from the terminal.

It can be understood that S904 corresponds to S404. For related descriptions in S904, refer to the descriptions of S404 above, and no further details will be provided here.

S905: The access network device sends the carrier phase information of the second reference signal to the first network element. Correspondingly, the first network element receives the carrier phase information of the second reference signal from the access network device.

It can be understood that S905 corresponds to S405, and for the related descriptions in S905, refer to the descriptions of S405 above, which will not be repeated here.

S906: The first network element determines a variation of a reference signal carrier phase of the to-be-detected device based on the terminal capability information, the carrier phase information of the first reference signal, and the carrier phase information of the second reference signal.

After the first network element separately receives the carrier phase information of the first reference signal from the terminal and the carrier phase information of the second reference signal from the access network device, the first network element may determine the variation of the reference signal carrier phase of the to-be-detected device based on the terminal capability information, the carrier phase information of the first reference signal, and the carrier phase information of the second reference signal. Alternatively, it can be understood that the first network element compensates for the variation of the reference signal carrier phase of the to-be-detected device using the terminal capability information reported by the terminal, for example, compensates for the variation of the reference signal carrier phase of the to-be-detected device based on the variation of the initial phase.

In summary, through the communication method illustrated in FIG. 9, the first network element can receive terminal capability information from the terminal, thereby being able to determine the variation in the reference signal carrier phase of the to-be-detected device based on the terminal capability information and the carrier phase information of the signals reported by the terminal and the access network device. This can be understood as the first network element using the terminal capability information reported by the terminal to compensate for the variation in the reference signal carrier phase of the to-be-detected device. Therefore, in the embodiments of this application, the variation in the reference signal carrier phase of the to-be-detected device is determined by incorporating the terminal capability information, which makes the detection of the deformation of the target device more accurate. The detection of the deformation of the target device in NLOS scenarios can be achieved with the assistance of the terminal, thereby improving the accuracy of the deformation detection of the target device.

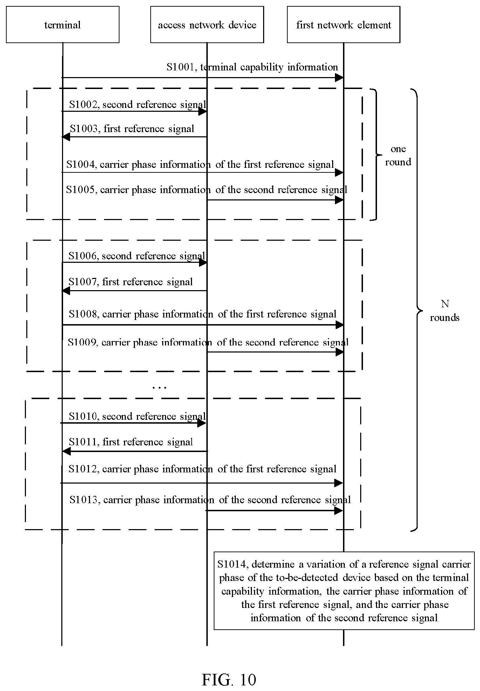

The following provides a description of a communication method provided by an embodiment of this application. Referring to FIG. 10, FIG. 10 is a schematic interaction diagram of still another communication method according to an embodiment of this application. It should be noted that, in this embodiment, the terminal may first send a second reference signal to the access network device, and after receiving the second reference signal, the access network device sends a first reference signal to the terminal. Alternatively, the access network device may first send the first reference signal to the terminal, and after receiving the first reference signal, the terminal sends the second reference signal to the access network device. FIG. 10 uses an example for illustration in which the terminal may first send the second reference signal to the access network device, and after receiving the second reference signal, the access network device sends the first reference signal to the terminal. Multiple rounds of signal transmission and reception may be performed between the terminal and the access network device, and the case of multiple rounds may be applicable, for example, to an RTT carrier phase measurement scenario. As shown in FIG. 10, the communication method may include at least the following steps.

S1001: The terminal sends terminal capability information to the first network element. Correspondingly, the first network element receives the terminal capability information from the terminal.

It can be understood that S1001 corresponds to S401, and for related descriptions in S1001, reference may be made to the descriptions of S401 above, which will not be repeated here.

S1002: The terminal sends a second reference signal to the access network device. Correspondingly, the access network device receives the second reference signal from the terminal.

It can be understood that S1002 corresponds to S403, and for the related descriptions in S1002, reference may be made to the descriptions of S403 above, which will not be repeated herein.

S1003: The access network device sends a first reference signal to the terminal. Correspondingly, the terminal receives the first reference signal from the access network device.

It can be understood that S1003 corresponds to S402. For related descriptions in S1003, reference may be made to the description of S402 above, and details will not be repeated here.

S1004: The terminal sends the carrier phase information of the first reference signal to the first network element. Correspondingly, the first network element receives the carrier phase information of the first reference signal from the terminal.

It can be understood that S1004 corresponds to S404, and for the related descriptions in S1004, reference may be made to the description of S404 above, which will not be repeated here.

S1005: The access network device sends the carrier phase information of the second reference signal to the first network element. Correspondingly, the first network element receives the carrier phase information of the second reference signal from the access network device.

It can be understood that S1005 corresponds to S405, and for the related descriptions in S1005, reference may be made to the description of S405 above, which will not be repeated here.

S1002 to S1005 may be understood as a round of signal receiving and sending between the terminal and the access network device. S1006 to S1009 and S1010 to S1013 correspond to a plurality of rounds of signal receiving and sending between the terminal and the access network device, which are different from S1002 to S1005, that is, a plurality of rounds of signal receiving and sending between the terminal and the access network device.

S1006: The terminal sends a second reference signal to the access network device. Correspondingly, the access network device receives the second reference signal from the terminal.

It may be understood that S1006 corresponds to S403. For related descriptions in S1006, refer to the descriptions of S403, and details are not described herein again.

S1007: The access network device sends a first reference signal to the terminal. Correspondingly, the terminal receives the first reference signal from the access network device.

It may be understood that S1007 corresponds to S402. For related descriptions in S1007, refer to the descriptions of S402, and details are not described herein again.

S1008: The terminal sends the carrier phase information of the first reference signal to the first network element. Correspondingly, the first network element receives the carrier phase information of the first reference signal from the terminal.

It can be understood that S1008 corresponds to S404, and for the relevant descriptions in S1008, reference may be made to the descriptions of S404 above, which will not be repeated here.

S1009: The access network device sends the carrier phase information of the second reference signal to the first network element. Correspondingly, the first network element receives the carrier phase information of the second reference signal from the access network device.

It can be understood that S1009 corresponds to S405, and the relevant descriptions in S1009 can be referred to the descriptions of S405 above, which will not be repeated here.

It is understandable that, in the process of multiple rounds of signal transmission and reception between the terminal and the access network device, steps S1010 to S1013 are repeated executions of steps S1006 to S1009, so they will not be described in detail here.

S1014: The first network element determines a variation of a reference signal carrier phase of the to-be-detected device based on the terminal capability information, the carrier phase information of the first reference signal, and the carrier phase information of the second reference signal.

After the first network element receives the carrier phase information of the first reference signal from the terminal and the carrier phase information of the second reference signal from the access network device multiple times, the first network element may determine the variation of the reference signal carrier phase of the to-be-detected device based on the terminal capability information, the carrier phase information of the multiple first reference signals, and the carrier phase information of the multiple second reference signals. Alternatively, it can be understood that the first network element compensates for the variation of the reference signal carrier phase of the to-be-detected device using the terminal capability information reported by the terminal, for example, compensates for the variation of the reference signal carrier phase of the to-be-detected device based on the variation of the initial phase.

In summary, through the communication method illustrated in FIG. 10, the first network element can receive the terminal capability information from the terminal, thereby being able to determine the variation of the reference signal carrier phase of the to-be-detected device based on the terminal capability information and the carrier phase information of the signals reported by the terminal and the access network device. This can also be understood as the first network element using the terminal capability information reported by the terminal to compensate for the variation of the reference signal carrier phase of the to-be-detected device. Therefore, in the embodiments of this application, the variation of the reference signal carrier phase of the to-be-detected device is determined by incorporating the terminal capability information, which makes the detection of the deformation of the target device more accurate. The detection of the deformation of the target device in NLOS scenarios can be achieved with the assistance of the terminal, thereby improving the accuracy of detecting the deformation of the target device.

It is understandable that, in order to implement the functions described in the foregoing embodiments, the terminal and the access network device include corresponding hardware structures and/or software modules for performing each function. A person skilled in the art should easily realize that, in combination with the units and method steps of the examples described in the embodiments disclosed in this application, this application can be implemented through hardware or a combination of hardware and computer software. Whether a particular function is performed by hardware or hardware driven by computer software depends on specific application scenarios and design constraints of the technical solutions.

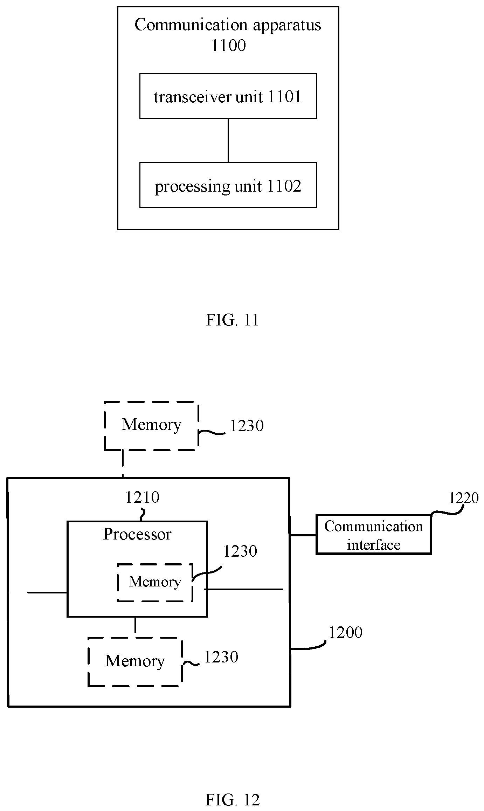

FIG. 11 and FIG. 12 are schematic structural diagrams of possible communication apparatuses according to an embodiment of this application. These communication apparatuses may be configured to implement functions of the terminal, the access network device, or the first network element in the foregoing method embodiments, and therefore can also achieve the beneficial effects of the foregoing method embodiments. The communication apparatus may be a terminal, an access network device, or a first network element. The communication apparatus includes modules or units that are in one-to-one correspondence with the methods/operations/steps/actions performed by the terminal, the access network device, or the first network element in the foregoing method embodiments. The unit may be a hardware circuit, may be software, or may be implemented by a combination of a hardware circuit and software. In the embodiments of this application, the communication apparatus may be one of the terminals 120a-120j shown in FIG. 1, may be the access network device 110a or 110b shown in FIG. 1, may be the core network 200 shown in FIG. 1, or may be a module (for example, a chip) applied to a terminal, an access network device, or a first network element.

As shown in FIG. 11, the communication apparatus 1100 may include a transceiver unit 1101 and a processing unit 1102. The communication apparatus 1100 is configured to implement the functions of the terminal, the access network device, or the first network element in the method embodiment illustrated in FIG. 4.

When the communication apparatus 1100 is configured to implement the functions of the terminal in the method embodiments illustrated in Figures 4 to 10:
The transceiver unit 1101 is configured to send terminal capability information;
The transceiver unit 1101 is further configured to receive a first reference signal from an access network device, and send a second reference signal to the access network device;
The transceiver unit 1101 is further configured to send carrier phase information of the first reference signal to the first network element, where the carrier phase information of the first reference signal is obtained by measuring the received first reference signal.

In a possible implementation, the terminal capability information includes at least one of an initial phase stability capability and a clock drift stability capability.

In a possible implementation, the initial phase stability capability includes at least one of indicating whether an initial phase of the terminal is stable and indicating a time range within which the initial phase of the terminal is stable.

In a possible implementation, the clock drift stability capability includes at least one of indicating whether a clock drift of the terminal is stable and indicating a time range within which the clock drift of the terminal is stable.

In a possible implementation, the terminal capability information includes a variation of an initial phase.

In a possible implementation, the variation of the initial phase includes the variation of the initial phase corresponding to a time range.

In a possible implementation, the variation of the initial phase is between 0 and 2π.

In a possible implementation, the transceiver unit 1101 receives a first reference signal from an access network device and sends a second reference signal to the access network device, which is specifically used for: receiving the first reference signal from the access network device based on the terminal capability information, and sending the second reference signal to the access network device.

In a possible implementation, the transceiver unit 1101 is configured to receive the first reference signal from the access network device and send the second reference signal to the access network device based on the terminal capability information, which is specifically used for: receiving the first reference signal from the access network device, and sending the second reference signal to the access network device according to a time interval, where the time interval is determined by the first network element based on the terminal capability information.

In a possible implementation, the time interval is an interval between the terminal receiving the first reference signal and transmitting the second reference signal.

In a possible implementation, the transceiver unit 1101 is configured to receive a first reference signal from an access network device and send a second reference signal to the access network device based on the terminal capability information, which is specifically used for: receiving the first reference signal from the access network device and sending the second reference signal to the access network device for N rounds according to a time interval, where N is a positive integer, and the time interval is determined by the first network element based on the terminal capability information.

In a possible implementation, the time interval is an interval between each two adjacent transmissions of the second reference signal by the terminal when the second reference signal is transmitted for N times.

In a possible implementation, the transceiver unit 1101 is further configured to receive first configuration information from an access network device, where the first configuration information configures a resource for the second reference signal, and the first configuration information includes a time interval.

In a possible implementation, the transceiver unit 1101 is specifically configured to receive the first reference signal from the access network device based on the terminal capability information, and send the second reference signal to the access network device, where the receiving the first reference signal from the access network device and sending the second reference signal to the access network device are specifically used for: sending the second reference signal to the access network device, and receiving the first reference signal from the access network device, wherein the first reference signal is sent to the terminal by the access network device based on a time interval after receiving the second reference signal from the terminal, and the time interval is determined by the first network element based on the terminal capability information.

In a possible implementation, the time interval is an interval between the access network device receiving the second reference signal and sending the first reference signal.

In a possible implementation, the transceiver unit 1101 is configured to receive the first reference signal from the access network device and send the second reference signal to the access network device based on the terminal capability information, specifically configured to: send the second reference signal to the access network device and receive the first reference signal from the access network device for N rounds according to a time interval, where the time interval is determined by the first network element based on the terminal capability information, and N is a positive integer.

In a possible implementation, the time interval is an interval between each two adjacent transmissions of the first reference signal by the access network device when the first reference signal is transmitted N times.

In a possible implementation, the transceiver unit 1101 is further configured to receive second configuration information from the first network element, wherein the second configuration information configures a resource for the first reference signal.

In a possible implementation, the carrier phase information of the first reference signal includes terminal capability information.

In a possible implementation, the first reference signal is a PRS, and the second reference signal is an SRS.

When the communication apparatus 1100 is configured to implement the functions of the first network element in the method embodiments illustrated in Figures 4 to 10:
The transceiver unit 1101 is configured to receive terminal capability information from a terminal;
The transceiver unit 1101 is further configured to receive carrier phase information of a first reference signal from a terminal, wherein the carrier phase information of the first reference signal is obtained by the terminal through measuring the received first reference signal;
The transceiver unit 1101 is further configured to receive carrier phase information of a second reference signal from an access network device, wherein the carrier phase information of the second reference signal is obtained by the access network device through measuring the received second reference signal; the first reference signal is transmitted and received between the terminal and the access network device based on the terminal capability information, or the second reference signal is transmitted and received between the terminal and the access network device based on the terminal capability information;
The processing unit 1102 is configured to determine the variation of the reference signal carrier phase of the to-be-detected device based on the carrier phase information of the first reference signal and the carrier phase information of the second reference signal.

In a possible implementation, the terminal capability information includes at least one of an initial phase stability capability and a clock drift stability capability.

In a possible implementation, the initial phase stability capability includes at least one of indicating whether the initial phase of the terminal is stable and indicating a time range within which the initial phase of the terminal is stable.

In a possible implementation, the clock drift stability capability includes at least one of indicating whether the clock drift of the terminal is stable and indicating a time range within which the clock drift of the terminal is stable.

In a possible implementation, the processing unit 1102 is further configured to determine the time interval based on the terminal capability information.

The first possible implementation, where the first reference signal is received and sent by the terminal and the access network device based on the terminal capability information, includes: the first reference signal is received by the access network device from the terminal, and sent to the terminal based on the time interval.

In a possible implementation, the time interval is an interval between receiving the second reference signal and sending the first reference signal by the access network device.

In a possible implementation, the time interval is an interval between each two adjacent times when the access network device sends the first reference signal for N times.

In a possible implementation, the transceiver unit 1101 is further configured to send third configuration information to the access network device, where the third configuration information configures a resource for the first reference signal, and the third configuration information includes the time interval.

In a possible implementation, the second reference signal is sent and received by the terminal and the access network device based on the terminal capability information, where the second reference signal is sent by the terminal to the access network device after the terminal receives the first reference signal from the access network device.

In a possible implementation, the time interval is an interval between receiving the first reference signal and sending the second reference signal by the terminal.

In a possible implementation, the time interval is an interval between each two adjacent transmissions of the second reference signal by the terminal when the second reference signal is transmitted for N times.

In a possible implementation, the transceiver unit 1101 is further configured to send second configuration information to the terminal, where the second configuration information configures a resource for the first reference signal.

In a possible implementation, the carrier phase information of the first reference signal includes terminal capability information.

In a possible implementation, the first reference signal is a PRS, and the second reference signal is an SRS.

When the communication apparatus 1100 is configured to implement the functions of the first network element in the method embodiments illustrated in FIG. 4 to FIG. 10:
The transceiver unit 1101 is configured to receive terminal capability information from a terminal, and receive carrier phase information of a first reference signal from the terminal, where the carrier phase information of the first reference signal is obtained by the terminal through measurement on a received first reference signal;
The transceiver unit 1101 is further configured to receive carrier phase information of a second reference signal from an access network device, where the carrier phase information of the second reference signal is obtained by the access network device through measurement on a received second reference signal;
The processing unit 1102 is configured to determine a variation of a reference signal carrier phase of the to-be-detected device based on the terminal capability information, the carrier phase information of the first reference signal, and the carrier phase information of the second reference signal.

In a possible implementation, the terminal capability information includes a variation of an initial phase.

In a possible implementation, the variation of the initial phase includes a variation of an initial phase corresponding to a time range.

In a possible implementation, the variation of the initial phase is between 0 and 2π.

In a possible implementation, the transceiver unit 1101 is further configured to send second configuration information to the terminal, where the second configuration information configures a resource for the second reference signal.

In a possible implementation, the transceiver unit 1101 is further configured to send third configuration information to the access network device, where the third configuration information configures a resource for the first reference signal.

In a possible implementation, the carrier phase information of the first reference signal includes the terminal capability information.

In a possible implementation, the first reference signal is a PRS, and the second reference signal is an SRS.

When the communication apparatus 1100 is configured to implement the functions of the access network device in the method embodiments illustrated in Figures 4 to 10:
The transceiver unit 1101 is configured to receive a second reference signal from a terminal and send a first reference signal to the terminal;
The transceiver unit 1101 is further configured to send carrier phase information of the second reference signal to the first network element, where the carrier phase information of the second reference signal is obtained by measuring the received second reference signal.

In a possible implementation, the transceiver unit 1101 is configured to receive a second reference signal from a terminal and send a first reference signal to the terminal, which is specifically used for: receiving the second reference signal from the terminal based on the terminal capability information, and sending the first reference signal to the terminal.

In a possible implementation, the terminal capability information includes at least one of an initial phase stability capability and a clock drift stability capability.

In a possible implementation, the initial phase stability capability includes at least one of indicating whether the initial phase of the terminal is stable and indicating a time range within which the initial phase of the terminal is stable.

In a possible implementation, the clock drift stability capability includes at least one of indicating whether the clock drift of the terminal is stable and indicating a time range within which the clock drift of the terminal is stable.

In a possible implementation, the transceiver unit 1101 is configured to receive the second reference signal from the terminal and send the first reference signal to the terminal based on the terminal capability information, specifically configured to: receive the second reference signal from the terminal, and send the first reference signal to the terminal according to a time interval, wherein the time interval is determined by the first network element based on the terminal capability information.

In a possible implementation, the time interval is an interval between the access network device receiving the second reference signal and transmitting the first reference signal.

In a possible implementation, the transceiver unit 1101 is configured to receive the second reference signal from the terminal based on the terminal capability information and send the first reference signal to the terminal, specifically configured to: receive the second reference signal from the terminal and send the first reference signal to the terminal for N rounds according to a time interval, wherein N is a positive integer, and the time interval is determined by the first network element based on the terminal capability information.

In a possible implementation, the time interval is an interval between each two adjacent transmissions of the first reference signal by the access network device when the first reference signal is transmitted for N times.

In a possible implementation, the transceiver unit 1101 is specifically configured to receive the second reference signal from the terminal based on the terminal capability information, and send the first reference signal to the terminal, where the first reference signal is sent to the terminal, and the second reference signal is received from the terminal, where the second reference signal is sent by the terminal to the access network device after receiving the first reference signal from the access network device based on a time interval, and the time interval is determined by the first network element based on the terminal capability information.

In a possible implementation, the time interval is an interval between the terminal receiving the first reference signal and the terminal transmitting the second reference signal.

In a possible implementation, the transceiver unit 1101 is specifically configured to receive the second reference signal from the terminal based on the terminal capability information, and send the first reference signal to the terminal, where the first reference signal is sent to the terminal and the second reference signal is received from the terminal for N rounds based on a time interval, where the time interval is determined by the first network element based on the terminal capability information, and N is a positive integer.

In a possible implementation, the time interval is an interval between each two adjacent transmissions of the second reference signal by the terminal when the second reference signal is transmitted for N times.

In a possible implementation, the transceiver unit 1101 is further configured to send first configuration information to the terminal, where the first configuration information configures a resource for the second reference signal.

In a possible implementation, the transceiver unit 1101 is further configured to send first configuration information to the terminal, where the first configuration information configures a resource for the second reference signal, and the first configuration information includes a time interval.

In a possible implementation, the transceiver unit 1101 is further configured to receive third configuration information from the first network element, where the third configuration information configures a resource for the first reference signal, and the third configuration information includes a time interval.

In a possible implementation, the first reference signal is a PRS, and the second reference signal is an SRS.

For more detailed descriptions of the transceiver unit 1101 and the processing unit 1102, reference may be made to the relevant descriptions in the method embodiments illustrated in FIG. 4 to 10.

A communication apparatus 1200 is provided as shown in FIG. 12, which is configured to implement the functions of the foregoing terminal, access network device, or first network element. The apparatus may be a communication device or an apparatus used in a communication device, where the communication device may be a terminal, an access network device, or a first network element. The apparatus used in the communication device may be a chip system or a chip within the communication device. The chip system may be composed of chips or may include chips and other discrete components.

The communication apparatus 1200 includes at least one processor 1210 configured to implement the processing functions of the device (for example, a terminal, an access network device, or a first network element) in the methods provided in the embodiments of this application. The communication apparatus 1200 may further include a communication interface 1220 configured to implement the receiving and sending operations of the device (for example, a terminal, an access network device, or a first network element) in the methods provided in the embodiments of this application. In the embodiments of this application, the communication interface may be a transceiver, a circuit, a bus, a module, or another type of communication interface, configured to communicate with another device through a transmission medium. For example, the communication interface 1220 may be configured to enable an apparatus in the communication apparatus 1200 to communicate with another device. The processor 1210 receives and sends data by using the communication interface 1220, and is configured to implement the methods described in the foregoing method embodiments.

The communication apparatus 1200 may further include at least one memory 1230, configured to store program instructions and/or data. The memory 1230 is coupled to the processor 1210. The coupling in this embodiment of this application is an indirect coupling or a communication connection between apparatuses, units, or modules, and may be implemented in an electrical, mechanical, or another form, and is used for information exchange between the apparatuses, units, or modules. The processor 1210 may operate in collaboration with the memory 1230. The processor 1210 may execute the program instructions stored in the memory 1230. At least one of the at least one memory may be included in the processor.

A specific connection medium between the communication interface 1220, the processor 1210, and the memory 1230 is not limited in this embodiment of this application. In this embodiment of this application, the memory 1230, the processor 1210, and the communication interface 1220 are connected through a bus in FIG. 12. The bus is represented by a thick line in FIG. 12. A connection manner between other components is merely an example for description, and is not intended to be construed as a limitation. The bus may be classified into an address bus, a data bus, a control bus, or the like. For ease of representation, only one thick line is used to represent the bus in FIG. 12, but this does not indicate that there is only one bus or only one type of bus.

When the communication apparatus 1200 is specifically an apparatus used for a device (for example, a terminal, an access network device, or a first network element), for example, when the communications apparatus 1200 is specifically a chip or a chip system, the communications interface 1220 may output or receive a baseband signal. When the communication apparatus 1200 is specifically a device (for example, a terminal, an access network device, or a first network element), the communications interface 1220 may output or receive a radio frequency signal. In this embodiment of this application, the processor may be a general purpose processor, a digital signal processor, an application-specific integrated circuit, a field programmable gate array or another programmable logic device, a discrete gate or a transistor logic device, or a discrete hardware component, and the processor may implement or perform the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware and software modules in the processor.

It should be noted that the communication interface 1220 may be configured to perform the functions of the aforementioned transceiver unit 1101, and the processor 1210 may be configured to perform the functions of the aforementioned processing unit 1102, which will not be further elaborated herein.

When the communication apparatus is a chip applied to a terminal, the terminal chip implements the functions of the terminal in the foregoing method embodiments, where the terminal chip receives information from other network elements; or the terminal chip sends information to other network elements.

When the communication apparatus is a chip applied to an access network device, the access network device chip implements the functions of the access network device in the foregoing method embodiments. The access network device chip receives information from other network elements; or the access network device chip sends information to other network elements.

When the communication apparatus is a chip applied to a first network element, the first network element chip implements the functions of the first network element in the foregoing method embodiments, where the first network element chip receives information from another network element; or the first network element chip sends information to another network element.

It is understandable that the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in the embodiments of this application may be implemented through hardware, or may be implemented by a processor executing software instructions. The software instructions may include corresponding software modules, which may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in an access network device or a terminal. Certainly, the processor and the storage medium may also exist as discrete components in the terminal or the access network device.

In the foregoing embodiments, the embodiments may be implemented entirely or partially by software, hardware, firmware, or any combination thereof. When software is used to implement the embodiments, the embodiments may be implemented entirely or partially in a form of a computer program product. The computer program product includes one or more computer programs or instructions. When the computer program or the instruction is loaded and executed on a computer, the procedures or functions described in the embodiments of this application are entirely or partially performed. The computer may be a general-purpose computer, a dedicated computer, a computer network, or another programmable apparatus. The computer program or the instruction may be stored in a computer-readable storage medium, or may be transmitted through the computer-readable storage medium. The computer-readable storage medium may be any usable medium accessible to the computer, or a data storage device, such as a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In the various embodiments of this application, unless otherwise specified or there is a logical conflict, the terms and/or descriptions between different embodiments are consistent and can be mutually referenced. The technical features in different embodiments may be combined to form a new embodiment based on their inherent logical relationships.

It can be understood that the various numerical designations in the embodiments of this application are merely for the purpose of differentiation for ease of description, and are not intended to limit the scope of the embodiments of this application. The sequence numbers of the foregoing processes do not imply an order of execution; the execution order of the processes should be determined based on their functions and internal logic.

An embodiment of this application further provides a computer-readable storage medium, where the computer-readable storage medium stores computer-executable instructions. When the computer-executable instructions are executed, the methods performed by the terminal, the access network device, or the first network element in the foregoing method embodiments are implemented.

An embodiment of this application further provides a computer program product, where the computer program product includes a computer program. When the computer program is executed, the methods performed by the terminal, the access network device, or the first network element in the foregoing method embodiments are implemented.

An embodiment of this application also provides a communication system, which includes a terminal, an access network device, or a first network element. The terminal is configured to perform the method performed by the terminal in the foregoing method embodiments, the access network device is configured to perform the method performed by the access network device in the foregoing method embodiments, and the first network element is configured to perform the method performed by the first network element in the foregoing method embodiments.

It should be noted that, for the sake of brevity in the description of the aforementioned method embodiments, they are all presented as a series of action combinations. However, those skilled in the art should understand that this application is not limited by the order of the described actions, because according to this application, certain steps may be performed in other orders or simultaneously. Furthermore, those skilled in the art should also understand that the embodiments described in this specification are all preferred embodiments, and the actions and modules mentioned are not necessarily essential to this application.

The descriptions of the embodiments provided in this application can be mutually referenced, with each embodiment emphasizing different aspects. For parts that are not detailed in a particular embodiment, reference may be made to the relevant descriptions of other embodiments. For the purpose of convenient and concise description, for example, the functions and the steps performed by the apparatuses and devices provided in the embodiments of this application may be described with reference to the relevant descriptions in the method embodiments of this application. The method embodiments and the apparatus embodiments may also be mutually referenced, combined, or cited.

It should be noted that the foregoing embodiments are merely intended to describe the technical solutions of this application, but are not intended to limit the same. Although this application has been described in detail with reference to the foregoing embodiments, a person of ordinary skill in the art should understand that they may still make modifications to the technical solutions described in the foregoing embodiments or make equivalent replacements to some or all of the technical features thereof; and these modifications or replacements do not cause the essence of the corresponding technical solutions to depart from the scope of the technical solutions of the embodiments of this application.

## Claims

1. A communication method, comprising:
sending terminal capability information to a first network element;
receiving a first reference signal from an access network device, and sending a second reference signal to the access network device;
sending carrier phase information of the first reference signal to the first network element, wherein the carrier phase information of the first reference signal is obtained by measuring the received first reference signal.

2. The method according to claim 1, wherein the terminal capability information comprises at least one of an initial phase stability capability and a clock drift stability capability.

3. The method according to claim 1, wherein the terminal capability information comprises a variation of an initial phase.

4. The method according to any one of claims 1 to 3, wherein the receiving a first reference signal from an access network device and sending a second reference signal to the access network device comprises:
receiving the first reference signal from the access network device and sending the second reference signal to the access network device based on the terminal capability information.

5. The method according to claim 4, wherein the receiving the first reference signal from the access network device and sending a second reference signal to the access network device based on the terminal capability information comprises:
receiving the first reference signal from the access network device, and sending the second reference signal to the access network device based on a time interval, wherein the time interval is determined by the first network element based on the terminal capability information; or
sending the second reference signal to the access network device, and receiving the first reference signal from the access network device, wherein the first reference signal is sent by the access network device to the terminal based on a time interval after receiving the second reference signal received from the terminal, and the time interval is determined by the first network element based on the terminal capability information.

6. The method according to claim 5, wherein the time interval is an interval between receiving the first reference signal and sending the second reference signal by the terminal, or the time interval is an interval between receiving the second reference signal and sending the first reference signal by the access network device.

7. The method according to claim 6, wherein the method further comprises:
receiving first configuration information from the access network device, wherein the first configuration information configures a resource for the second reference signal, and the first configuration information comprises the time interval.

8. The method according to any one of claims 1 to 7, wherein the method further comprises:
receiving second configuration information from the first network element, wherein the second configuration information configures a resource for the first reference signal.

9. The method according to any one of claims 1 to 8, wherein the carrier phase information of the first reference signal comprises the terminal capability information.

10. The method according to any one of claims 1 to 9, wherein the first reference signal is a positioning reference signal PRS, and the second reference signal is a sounding reference signal SRS.

11. A communication method, comprising:
receiving terminal capability information from a terminal;
receiving carrier phase information of a first reference signal from the terminal, wherein the carrier phase information of the first reference signal is obtained by the terminal through measuring the received first reference signal;
receiving carrier phase information of a second reference signal from an access network device, wherein the carrier phase information of the second reference signal is obtained by the access network device through measuring the received second reference signal; the first reference signal is received and sent between the terminal and the access network device based on the terminal capability information, or the second reference signal is sent and received between the terminal and the access network device based on the terminal capability information;
determining a variation of a reference signal carrier phase of a to-be-detected device based on the carrier phase information of the first reference signal and the carrier phase information of the second reference signal.

12. The method according to claim 11, wherein the terminal capability information comprises at least one of an initial phase stability capability and a clock drift stability capability.

13. The method according to claim 11 or 12, wherein the method further comprises:
determining a time interval based on the terminal capability information;
the first reference signal is received and sent by the terminal and the access network device based on the terminal capability information, comprising: the first reference signal is sent by the access network device to the terminal based on the time interval after receiving the second reference signal from the terminal;
the second reference signal is sent and received by the terminal and the access network device based on the terminal capability information, comprising: the second reference signal is sent by the terminal to the access network device based on the time interval after receiving the first reference signal from the access network device.

14. The method according to claim 13, wherein the time interval is an interval between receiving the second reference signal and sending the first reference signal by the access network device; or the time interval is an interval between receiving the first reference signal and sending the second reference signal by the terminal.

15. The method according to claim 13 or 14, wherein the method further comprises:
sending third configuration information to the access network device, wherein the third configuration information configures a resource for the first reference signal, and the third configuration information comprises the time interval.

16. The method according to any one of claims 11 to 15, wherein the method further comprises:
sending second configuration information to the terminal, where the second configuration information configures a resource for the first reference signal.

17. The method according to any one of claims 11 to 16, wherein the carrier phase information of the first reference signal comprises the terminal capability information.

18. The method according to any one of claims 11 to 17, wherein the first reference signal is a positioning reference signal PRS, and the second reference signal is a sounding reference signal SRS.

19. A communication method, comprising:
receiving terminal capability information from a terminal;
receiving carrier phase information of a first reference signal from the terminal, wherein the carrier phase information of the first reference signal is obtained by the terminal through measuring the received first reference signal;
receiving carrier phase information of a second reference signal from an access network device, wherein the carrier phase information of the second reference signal is obtained by the access network device through measuring the received second reference signal;
determining a variation of a reference signal carrier phase of a to-be-detected device based on the terminal capability information, the carrier phase information of the first reference signal, and the carrier phase information of the second reference signal.

20. The method according to claim 19, wherein the terminal capability information comprises a variation of an initial phase.

21. The method according to claim 19 or 20, wherein the method further comprises:
sending second configuration information to the terminal, where the second configuration information configures a resource for the second reference signal.

22. The method according to any one of claims 19 to 21, wherein the method further comprises:
sending third configuration information to the access network device, wherein the third configuration information configures a resource for the first reference signal.

23. The method according to any one of claims 19 to 22, wherein the carrier phase information of the first reference signal comprises the terminal capability information.

24. The method according to any one of claims 19 to 23, wherein the first reference signal is a positioning reference signal PRS, and the second reference signal is a sounding reference signal SRS.

25. A communication apparatus, comprising:
a transceiver unit, configured to send terminal capability information to a first network element;
the transceiver unit is further configured to receive a first reference signal from an access network device, and send a second reference signal to the access network device;
the transceiver unit is further configured to send carrier phase information of the first reference signal to the first network element, wherein the carrier phase information of the first reference signal is obtained by measuring the received first reference signal.

26. The apparatus according to claim 25, wherein the terminal capability information comprises at least one of an initial phase stability capability and a clock drift stability capability.

27. The apparatus according to claim 25, wherein the terminal capability information comprises a variation of an initial phase.

28. The apparatus according to any one of claims 25 to 27, wherein the transceiver unit is configured to receive a first reference signal from an access network device, and send a second reference signal to the access network device, and is specifically configured to:
receive the first reference signal from the access network device and send the second reference signal to the access network device based on the terminal capability information.

29. The apparatus according to claim 28, wherein the transceiver unit is configured to receive the first reference signal from the access network device and send the second reference signal to the access network device based on the terminal capability information, and is specifically configured to:
receive the first reference signal from the access network device, and send the second reference signal to the access network device according to a time interval, wherein the time interval is determined by the first network element based on the terminal capability information; or
send the second reference signal to the access network device, and receive the first reference signal from the access network device, wherein the first reference signal is sent to the terminal by the access network device based on a time interval after receiving the second reference signal from the terminal, and the time interval is determined by the first network element based on the terminal capability information.

30. The apparatus according to claim 29, wherein the time interval is an interval between receiving the first reference signal and sending the second reference signal by the terminal, or the time interval is an interval between receiving the second reference signal and sending the first reference signal by the access network device.

31. The apparatus according to claim 30, wherein the transceiver unit is further configured to receive first configuration information from the access network device, wherein the first configuration information configures a resource for the second reference signal, and the first configuration information comprises the time interval.

32. The apparatus according to any one of claims 25 to 31, wherein the transceiver unit is further configured to receive second configuration information from the first network element, wherein the second configuration information configures a resource for the first reference signal.

33. The apparatus according to any one of claims 25 to 32, wherein the carrier phase information of the first reference signal comprises the terminal capability information.

34. The apparatus according to any one of claims 25 to 33, wherein the first reference signal is a positioning reference signal PRS, and the second reference signal is a sounding reference signal SRS.

35. A communication apparatus, comprising:
a transceiver unit, configured to receive terminal capability information from a terminal;
the transceiver unit is further configured to receive carrier phase information of a first reference signal from the terminal, wherein the carrier phase information of the first reference signal is obtained by the terminal by measuring the received first reference signal;
the transceiver unit is further configured to receive carrier phase information of a second reference signal from an access network device, wherein the carrier phase information of the second reference signal is obtained by the access network device through measuring the received second reference signal; wherein the first reference signal is received and sent between the terminal and the access network device based on the terminal capability information, or the second reference signal is sent and received between the terminal and the access network device based on the terminal capability information;
a processing unit, configured to determine a variation of a reference signal carrier phase of a to-be-detected device based on the carrier phase information of the first reference signal and the carrier phase information of the second reference signal.

36. The apparatus according to claim 35, wherein the terminal capability information comprises at least one of an initial phase stability capability and a clock drift stability capability.

37. The apparatus according to claim 35 or 36, wherein the processing unit is further configured to determine a time interval based on the terminal capability information;
the first reference signal is received and sent by the terminal and the access network device based on the terminal capability information, comprising: the first reference signal is sent by the access network device to the terminal based on the time interval after receiving the second reference signal from the terminal;
the second reference signal is sent and received by the terminal and the access network device based on the terminal capability information, comprising: the second reference signal is sent by the terminal to the access network device based on the time interval after receiving the first reference signal from the access network device.

38. The apparatus according to claim 37, wherein the time interval is an interval between receiving the second reference signal and sending the first reference signal by the access network device; or the time interval is an interval between receiving the first reference signal and sending the second reference signal by the terminal.

39. The apparatus according to claim 37 or 38, wherein the transceiver unit is further configured to send third configuration information to the access network device, wherein the third configuration information configures a resource for the first reference signal, and the third configuration information comprises the time interval.

40. The apparatus according to any one of claims 35 to 39, wherein the transceiver unit is further configured to send second configuration information to the terminal, wherein the second configuration information configures a resource for the first reference signal.

41. The apparatus according to any one of claims 35 to 40, wherein the carrier phase information of the first reference signal comprises the terminal capability information.

42. The apparatus according to any one of claims 35 to 41, wherein the first reference signal is a positioning reference signal PRS, and the second reference signal is a sounding reference signal SRS.

43. A communication apparatus, comprising:
a transceiver unit, configured to receive terminal capability information from a terminal;
the transceiver unit is further configured to receive carrier phase information of a first reference signal from the terminal, wherein the carrier phase information of the first reference signal is obtained by the terminal through measuring the received first reference signal;
the transceiver unit is further configured to receive carrier phase information of a second reference signal from an access network device, wherein the carrier phase information of the second reference signal is obtained by the access network device through measuring the received second reference signal;
a processing unit, configured to determine a variation of a reference signal carrier phase of a to-be-detected device based on the terminal capability information, the carrier phase information of the first reference signal, and the carrier phase information of the second reference signal.

44. The apparatus according to claim 43, wherein the terminal capability information comprises a variation of an initial phase.

45. The apparatus according to claim 43 or 44, wherein the transceiver unit is further configured to send second configuration information to the terminal, wherein the second configuration information configures a resource for the second reference signal.

46. The apparatus according to any one of claims 43 to 45, wherein the transceiver unit is further configured to send third configuration information to the access network device, wherein the third configuration information configures a resource for the first reference signal.

47. The apparatus according to any one of claims 43 to 46, wherein the carrier phase information of the first reference signal comprises the terminal capability information.

48. The apparatus according to any one of claims 43 to 47, wherein the first reference signal is a positioning reference signal PRS, and the second reference signal is a sounding reference signal SRS.

49. A communication apparatus, comprising a processor, wherein the processor is coupled to a memory, the memory is configured to store a program or instructions, and when the program or the instructions are executed by the processor, the apparatus is enabled to perform the method according to any one of claims 1 to 24.

50. A computer-readable storage medium, wherein the storage medium stores a computer program or instructions, and when the computer program or the instructions are executed, the method according to any one of claims 1 to 24 is implemented.

51. A computer program product, comprising computer program code, wherein when the computer program code is run, the method according to any one of claims 1 to 24 is implemented.

52. A communication system, comprising a terminal and a first network element, wherein the terminal is configured to perform the method according to any one of claims 1 to 10, and the first network element is configured to perform the method according to any one of claims 11 to 24.
